# EUROPEAN PATENT APPLICATION

(11) **EP 3 838 748 A1**
(43) Date of publication of application: **23.06.2021**
(21) Application number: 18930276.3
(22) Date of filing: 17.08.2018
(51) Int. Cl.: B64C 27/02, B64C 27/32

(54) **MULTI-ROTARY BLADE AERIAL VEHICLE AND CONTROL METHOD THEREOF**

(71) Applicant: SZ DJI Technology Co., Ltd., Shenzhen, Guangdong 518057 (CN)
(72) Inventor: LI, Yang, Shenzhen, Guangdong 518057 (CN); TAO, Ye, Shenzhen, Guangdong 518057 (CN)
(74) Representative: Goddar, Heinz J.
(86) International application number: PCT/CN2018/101110
(87) International publication number: WO 2020/034205

(57) **Abstract**

A multi-rotor aerial vehicle (100) and a control method of the multi-rotor aerial vehicle (100). The multi-rotor aerial vehicle (100) includes a body (10), a first rotor (20), and a second rotor (30). The body (10) includes a first side (11) and a second side (12) opposite to each other. The first rotor (20) is connected to the first side (11) of the body (10). The second rotor (30) is connected to the second side (12) of the body (10). The torque coefficient of the second rotor (30) is different from the torque coefficient of the first rotor (20). When the multi-rotor aerial vehicle 100 is flying in a direction from the second side (12) toward to the first side (11) or flying in a direction from the first side (11) toward to the second side (12), the first rotor (20) rotates at a first rotational speed, and the second rotor (30) rotates at a second rotational speed, and the absolute value of the difference between the first rotational speed and the second rotational speed is less than a predetermined value.

## Description

### TECHNICAL FIELD

The present disclosure relates to the field of aircraft and, more specifically, to a multi-rotor aerial vehicle and a control method thereof.

### BACKGROUND

Ordinary aerial vehicles adopt multi-rotor flight system with equal size and equal wing shape, and the excitation frequency of each rotor is basically the same when hovering. However, in order to achieve all direction flight and provide horizontal component moment, the rotation speed of each rotor motor needs to be different, resulting in a change in the excitation frequency of each rotor. For the entire multi-rotor aerial vehicle, the vibration frequency band during flight is significantly wider than hovering, and the width of this frequency band becomes wider with the increase of the motor speed difference, which can increase the probability of coupling between the excitation frequency and the natural frequency of the multi-rotor aerial vehicle, causing additional vibration problems. The vibration will cause the imaging quality of the imaging device on the multi-rotor aerial vehicle to be poor.

### SUMMARY

The embodiments of the present disclosure provide a multi-rotor aerial vehicle and a control method of the multi-rotor aerial vehicle.

A multi-rotor aerial vehicle including a body, a first rotor, and a second rotor. The body includes a first side and a second side opposite to each other. The first rotor is connected to the first side of the body and the second rotor is connected to the second side of the body. A torque coefficient of the second rotor is different from a torque coefficient of the first rotor. When the multi-rotor aerial vehicle flies in a direction from the second side toward the first side or from the first side toward the second side, the first rotor rotates at a first rotational speed, the second rotor rotates at a second rotational speed, and an absolute value of a difference between the first rotational speed and the second rotational speed is less than a predetermined value.

The multi-rotor aerial vehicle of the embodiments of the present disclosure can adopt the first rotor and the second rotor with different torque coefficients. When the multi-rotor aerial vehicle is in the fixed-direction flight, the first rotor can rotate at a first rotational speed, the second rotor can rotate at a second rotational speed, and the absolute value of the difference between the first rotational speed and the second rotational speed can be relatively small and the excitation force frequency band can be relatively narrow, thereby reducing the probability of the body resonating with the first rotor or the second rotor 30, and improving the imaging quality of the imaging device carried by the body.

The control method of an embodiment of the present disclosure can be used in a multi-rotor aerial vehicle. The multi-rotor aerial vehicle including a body, a first rotor, and a second rotor. The body includes a first side and a second side opposite to each other. The first rotor is connected to the first side of the body and the second rotor is connected to the second side of the body. A torque coefficient of the second rotor is different from a torque coefficient of the first rotor. When the multi-rotor aerial vehicle flies in a direction from the second side toward the first side or from the first side toward the second side, the control includes controlling the first rotor to rotate at a first rotational speed; and controlling the second rotor to rotate at a second rotational speed, where the absolute value of the difference between the first rotational speed and the second rotational speed is less than a predetermined value.

In the control method of the multi-rotor aerial vehicle according to an embodiment of the present disclosure, the first rotor and the second rotor can have different torque coefficients. During the fixed-direction flight of the multi-rotor aerial vehicle, the first rotor be controlled to rotate at the first rotational speed, the second rotor can be controlled to rotate at the second rotational speed, and the absolute value of the difference between the first rotational speed and the second rotational speed can be relatively small, the excitation force frequency may be relatively narrow, thereby reducing the probability of the body resonating with the first rotor or the second rotor, and improving the imaging quality of the imaging device carried by the body.

The multi-rotor aerial vehicle according to another embodiment of the present disclosure includes a body, a first rotor, a second rotor, and a flight control system. The body includes a first side and a second side opposite to each other. The first rotor is connected to the first side of the body and a second rotor is connected to the second side of the body. A torque coefficient of the second rotor is different from a torque coefficient of the first rotor. When the multi-rotor aerial vehicle is flying from the second side toward the first side or from the first side toward the second side, the flight control system is configured to control the first rotor to rotate at a first rotational speed; and control the second rotor to rotate at a second rotational speed, where an absolute value of a difference between the first rotational speed and the second rotational speed is less than a predetermined value

In the multi-rotor aerial vehicle provided in an embodiment of the present disclosure, the first rotor and the second rotor can have different torque coefficients. During the fixed-direction flight of the multi-rotor aerial vehicle, the flight control system can control the first rotor 20 to rotate at the first rotational speed, control the second rotor to rotate at the second rotational speed, and the absolute value of the difference between the first rotational speed and the second rotational speed can be relatively small, the excitation force frequency may be relatively narrow, thereby reducing the probability of the body resonating with the first rotor or the second rotor, and improving the imaging quality of the imaging device carried by the body.

The additional aspects and advantages of the present disclosure will become apparent in the following description, or can be learned through practice of the present disclosure.

### BRIEF DESCRIPTION OF THE DRAWINGS

The above and/or additional aspects and advantages of the present disclosure will become obvious and easy to understand from the description of embodiments in conjunction with the following drawings.
FIG. 1 is a schematic structural diagram of a multi-rotor aerial vehicle according to an embodiment of the present disclosure.
FIG. 2 is a schematic side view of the multi-rotor aerial vehicle during a fixed-direction flight according to an embodiment of the present disclosure.
FIG. 3 is a schematic diagram of an excitation force frequency band of a multi-rotor aerial vehicle during a fixed-direction flight in conventional technology.
FIG. 4 is a schematic diagram of the excitation force frequency band of the multi-rotor aerial vehicle during a fixed-direction flight according to an embodiment of the present disclosure.
FIG. 5 is a schematic side view of the multi-rotor aerial vehicle when hovering according to an embodiment of the present disclosure.
FIG. 6 is a schematic flowchart of a multi-rotor aerial vehicle control method according to an embodiment of the present disclosure.
FIG. 7 is a schematic flowchart of the multi-rotor aerial vehicle control method according to an embodiment of the present disclosure.
FIG. 8 is a schematic flowchart of the multi-rotor aerial vehicle control method according to an embodiment of the present disclosure.
FIG. 9 is a schematic structural diagram of the multi-rotor aerial vehicle including a flight control system according to an embodiment of the present disclosure.

### DETAILED DESCRIPTION OF THE EMBODIMENTS

Reference will now be made in detail to exemplary embodiments, examples of which are illustrated in the accompanying drawings, in which the same or similar reference numbers throughout the drawings represent the same or similar elements or elements having same or similar functions. Embodiments described below with reference to drawings are merely exemplary and used for explaining the present disclosure, and should not be understood as limitation to the present disclosure.

In the description of the present disclosure, it should be understood that the terms "first,", "second," etc. are only used to indicate different components, but do not indicate or imply the order, the relative importance, or the number of the components. Further, in the description of the present disclosure, unless otherwise specified, the term "first," or "second" preceding a feature explicitly or implicitly indicates one or more of such feature

In the present disclosure, unless specified or limited otherwise, the terms "mounted," "connected," "coupled," "fixed" and the like are used broadly, and may be, for example, fixed connections, detachable connections, or integral connections; may also be mechanical or electrical connections; may also be direct connections or indirect connections via intervening structures; may also be inner communications of two elements or interactions of two elements, which can be understood by those skilled in the art according to specific situations.

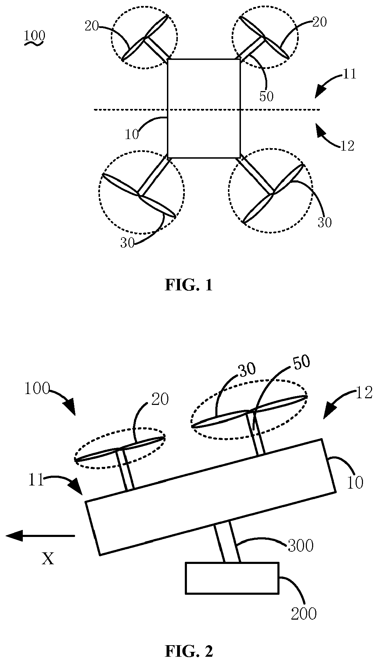

Referring to FIG. 1, a multi-rotor aerial vehicle 100 of an embodiment of the present disclosure includes a body 10, a first rotor 20, and a second rotor 30. The body 10 includes a first side 11 and a second side 12 opposite to each other. The first rotor 20 may be connected to the first side 11 of the body 10. The second rotor 30 may be connected to the second side 12 of the body 10. The torque coefficient of the second rotor 30 may be different from the torque coefficient of the first rotor 20. When the multi-rotor aerial vehicle 100 is flying in a direction from the second side 12 toward to the first side 11 or flying in a direction from the first side 11 toward to the second side 12, the first rotor 20 may rotate at a first rotational speed, and the second rotor 30 may rotate at a second rotational speed. The absolute value of the difference between the first rotational speed and the second rotational speed may be less than a predetermined value N.

More specifically, the multi-rotor aerial vehicle 100 of the embodiments of the present disclosure may be a quad-rotor aerial vehicle, a hexa-rotor aerial vehicle, or an octo-rotor aerial vehicle, etc., which is not limited here. Referring to both FIG. 1 and FIG. 2, the multi-rotor aerial vehicle 100 of this embodiment takes a quad-rotor aerial vehicle as an example, which can be equipped with an imaging device 200. The imaging device 200 can be used to capture images or videos when the multi-rotor aerial vehicle 100 is flying or hovering. The imaging device 200 may be mounted on a gimbal 300, and the gimbal 300 may be fixedly connected to the body 10. The gimbal 300 can provide a suitable imaging angle for the imaging device 200. When the body 10 of the multi-rotor aerial vehicle 100 vibrates greatly, the imaging device 200 also vibrates greatly, and the imaging quality of the imaging device 200 is poor. Especially for a high-power optical zoom lens, a slight vibration of the body 10 may cause significant shaking of the captured image, which affects the quality of the imaging.

Both the first rotor 20 and the second rotor 30 may be connected to the body 10 through an arm 50. The torque coefficient of the second rotor 30 may be different from the torque coefficient of the first rotor 20. The torque coefficient may refer to the magnitude of the interaction between the rotor and the air. The smaller the torque coefficient, the smaller the interaction between the rotor and the air. For example, the torque coefficient of the first rotor 20 is smaller than the torque coefficient of the second rotor 30 indicates that the interaction of the first rotor 20 with the air is smaller than the interaction of the second rotor 30 with the air.

The multi-rotor aerial vehicle 100 may also include a drive assembly (not shown in FIGs.) disposed on the arm 50. The drive assembly can be used to apply an exciting force to the first rotor 20 and the second rotor 30 to drive the first rotor 20 and the second rotor 30 to rotate. The drive assembly may include a plurality of driving motors. The plurality of driving motors may be fixedly connected to the first rotor 20 and the second rotor 30 respectively. Driven by the drive assembly, the first rotor 20 may rotate at a certain speed, and the second rotor 30 may rotate at a certain speed. In the present embodiment, when the multi-rotor aerial vehicle 100 flies toward a direction from the second side 12 toward to the first side 11, the first rotor 20 may rotate at the first rotational speed, the second rotor 30 may rotate at the second rotational speed, and the absolute value of the difference between the first rotational speed and the second rotational speed may be less than the predetermined value N. When the multi-rotor aerial vehicle 100 flies toward a direction from the first side 11 toward to the second side 12, the first rotor 20 may rotate at the first rotational speed, the second rotor 30 may rotate at the second rotational speed, and the absolute value of the difference between the first rotational speed and the second rotational speed may be less than the predetermined value N. The propeller frequency of the first rotor 20 and the propeller frequency of the second rotor 30 may be respectively equal to the excitation force frequency of the corresponding drive motor. The greater the rotational speed of the drive motor, the greater the rotational speed of the corresponding rotor, and the greater the rotor frequency.

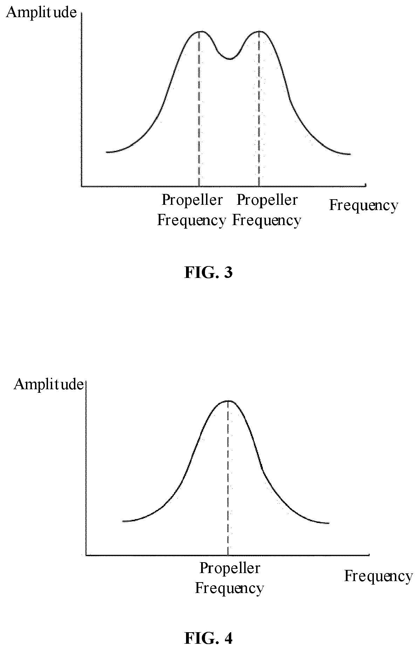

The multi-rotor aerial vehicle 100 needs to have the effect of the horizontal component moment to fly in a fixed-direction flight. Referring to FIG. 3, in the conventional multi-rotor aerial vehicle, since the torque coefficients of the multiple rotors are equal, when the multi-rotor aerial vehicle is flying, e.g., flying forward, the absolute value of the difference between the rotational speed of the rotor on the nose side and the rotational speed of the rotor on the tail side may be large. The frequency band between the propeller frequency of the rotor on the nose side and the propeller frequency of the rotor on the tail side may be relatively wide, resulting in a higher probability of coupling between the excitation force band frequency band and neutral frequency of the body, and a higher probability of resonance between the body and the rotor. Therefore, in the present embodiment, the torque coefficient of the second rotor 30 may be different from the torque coefficient of the first rotor 20. For example, the torque coefficient of the second rotor 30 may be greater than the torque coefficient of the first rotor 20, or the torque coefficient of the second rotor 30 may be less than the torque coefficient of the first rotor 20. Referring to FIG. 2 and FIG. 4, when the multi-rotor aerial vehicle 100 is flying from the second side 12 toward the first side 11 (the X direction as shown in FIG. 2), since the absolute value of the difference between the first rotational speed and the second rotational speed is less than the predetermined value N, therefore, the frequency band between the propeller frequency of the first rotor 20 and the propeller frequency of the second rotor 30 may be relatively narrow, and the smaller the predetermined value, the narrower the frequency band between the two propeller frequencies. At this time, the probability of the excitation force frequency band coupling with the natural frequency of the body 10 may be low, and the probability of the body 10 resonating with the rotor may be low. In the present embodiment, the predetermined value N may be adjusted based on a parameter condition of the rotor of the multi-rotor aerial vehicle 100. For example, the predetermined value N may be less than or equal to 50, 100, 150 revolutions per minutes (RPM), etc., then the absolute value of the difference between the first rotational speed and the second rotational speed may be any value in [0, N]. For example, when N = 50 RPM, the absolute value of the difference between the first rotational speed and the second rotational speed may be any value such as 1, 10, 30, 45, 48, 50 RPM, etc. In another example, when N = 100 RPM, the absolute value of the difference between the first rotational speed and the second rotational speed may be any value such as 0, 30, 50, 70, 90, 95 RPM, etc. In another example, when N = 150 RPM, the absolute value of the difference between the first rotational speed and the second rotational speed may be any value such as 0, 25, 50, 100, 120, 140 RPM, etc. In this way, the vibration can be relatively small when the multi-rotor aerial vehicle 100 flies with the first rotor 20 and the second rotor 30 having the same or similar rotational speed and in a direction from the second side 12 toward the first side 11 or in a direction from the first side 11 toward the second side 12, and the imaging quality of the imaging device 200 can be relatively high. In addition, the predetermined value N may be close to zero. It can be understood that may also be set based on actual needs, such as less than or equal to 20 revolution per second (RPS), less than 30 RPS, etc., which is not limited in this embodiment.

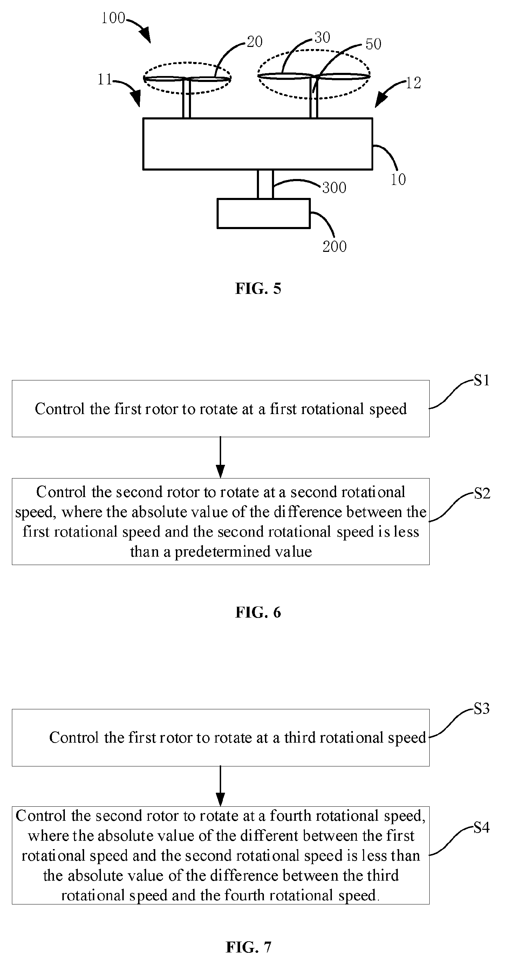

Referring to FIG. 1, in this embodiment, when the torque coefficient of the second rotor 30 is greater than the torque coefficient of the first rotor 20, the first side 11 may be the nose side of the body 10, the second side 12 may be the tail side of the body 10, and the multi-rotor aerial vehicle 100 flying in the direction from the second side 12 toward the first side 11 may indicate that the multi-rotor aerial vehicle 100 is in the forward flight state (as shown in FIG. 2). At this time, the first rotor 20 mat rotate at the first rotational speed, the second rotor 30 may rotate at the second rotational speed, and the absolute value of the difference between the first rotational speed and the second rotational speed may be less than the predetermined value N. When the multi-rotor aerial vehicle 100 is hovering (shown in FIG. 5), the first rotor 20 may rotate at a third rotational speed, the second rotor 30 may rotate at a fourth rotational speed, where the absolute value of the difference between the first rotational speed and the second rotational speed may be less than the difference between the third rotational speed and the fourth rotational speed. Therefore, when the multi-rotor aerial vehicle 100 is flying forward, since the absolute value of the difference between the first rotational speed and the second rotational speed may be less than the absolute value of the difference between the third rotational speed and the fourth rotational speed, the frequency band between the propeller frequency of the first rotor 20 and the propeller frequency of the second rotor 30 may be narrower than when hovering. The probability of the body 10 and the rotor resonating may be lower, thereby reducing the probability of the body 10 and the rotor resonating and causing poor imaging effect.

In other embodiments, when the torque coefficient of the second rotor 30 is less than the torque coefficient of the first rotor 20, the first side 11 may be the nose side of the body 10, the second side 12 may be the tail side of the body 10, and the multi-rotor aerial vehicle 100 flying in the direction from the first side 11 toward the second side 12 may indicate that the multi-rotor aerial vehicle 100 is the backward flight state. At this time, the first rotor 20 mat rotate at the first rotational speed, the second rotor 30 may rotate at the second rotational speed, and the absolute value of the difference between the first rotational speed and the second rotational speed may be less than the predetermined value N. When the multi-rotor aerial vehicle 100 is hovering, the first rotor 20 may rotate at the third rotational speed, the second rotor 30 may rotate at the fourth rotational speed, where the absolute value of the difference between the first rotational speed and the second rotational speed may be less than the difference between the third rotational speed and the fourth rotational speed. Therefore, when the multi-rotor aerial vehicle 100 is flying backward, since the absolute value of the difference between the first rotational speed and the second rotational speed may be less than the absolute value of the difference between the third rotational speed and the fourth rotational speed, the frequency band between the propeller frequency of the first rotor 20 and the propeller frequency of the second rotor 30 may be narrower than when hovering and the probability of the body 10 and the rotor resonating may be lower.

In other embodiments, when the torque coefficient of the second rotor 30 is greater than the torque coefficient of the first rotor 20, the first side 11 may be the left side of the body 10, the second side 12 may be the right side of the body 10, and the multi-rotor aerial vehicle 100 flying in the direction from the second side 12 toward the first side 11 may indicate that the multi-rotor aerial vehicle 100 is the left flight state. At this time, the first rotor 20 mat rotate at the first rotational speed, the second rotor 30 may rotate at the second rotational speed, and the absolute value of the difference between the first rotational speed and the second rotational speed may be less than the predetermined value N. When the multi-rotor aerial vehicle 100 is hovering, the first rotor 20 may rotate at the third rotational speed, the second rotor 30 may rotate at the fourth rotational speed, where the absolute value of the difference between the first rotational speed and the second rotational speed may be less than the difference between the third rotational speed and the fourth rotational speed. Therefore, when the multi-rotor aerial vehicle 100 flies left, since the absolute value of the difference between the first rotational speed and the second rotational speed may be less than the absolute value of the difference between the third rotational speed and the fourth rotational speed, the frequency band between the propeller frequency of the first rotor 20 and the propeller frequency of the second rotor 30 may be narrower than when hovering and the probability of the body 10 and the rotor resonating may be lower.

In other embodiments, when the torque coefficient of the second rotor 30 is less than the torque coefficient of the first rotor 20, the first side 11 may be the left side of the body 10, the second side 12 may be the right side of the body 10, and the multi-rotor aerial vehicle 100 flying in the direction from the first side 11 toward the second side 12 may indicate that the multi-rotor aerial vehicle 100 is the right flight state. At this time, the first rotor 20 mat rotate at the first rotational speed, the second rotor 30 may rotate at the second rotational speed, and the absolute value of the difference between the first rotational speed and the second rotational speed may be less than the predetermined value N. When the multi-rotor aerial vehicle 100 is hovering, the first rotor 20 may rotate at the third rotational speed, the second rotor 30 may rotate at the fourth rotational speed, where the absolute value of the difference between the first rotational speed and the second rotational speed may be less than the difference between the third rotational speed and the fourth rotational speed. Therefore, when the multi-rotor aerial vehicle 100 flies right, since the absolute value of the difference between the first rotational speed and the second rotational speed may be less than the absolute value of the difference between the third rotational speed and the fourth rotational speed, the frequency band between the propeller frequency of the first rotor 20 and the propeller frequency of the second rotor 30 may be narrower than when hovering and the probability of the body 10 and the rotor resonating may be lower.

Of course, in addition to the first side 11 and the second side 12 of the multi-rotor aerial vehicle 100 being a fixed side of the body 10, during the flight of the multi-rotor aerial vehicle 100, the first side 11 and the second side 12 may also change based on the flight state of the multi-rotor aerial vehicle 100. For example, the multi-rotor aerial vehicle 100 may change from one flight state to another flight state, or the multi-rotor aerial vehicle 100 may change from one flight to another flight state, and then change to another flight state. Regardless of type of flight state change, the first rotor 20 and the second rotor 30 may also change, correspondingly, the original torque coefficient of the first rotor 20 and the torque coefficient of the second rotor 30 may also change.

The multi-rotor aerial vehicle 100 may change from one flight state to another, for example, the multi-rotor aerial vehicle 100 may change from the forward flight to the left flight. A detailed description will be provided below by taking the multi-rotor aerial vehicle 100 changing from the forward flight to the left flight as an example. At the initial moment, the first side 11 may be the nose side of the body 10, the second side 12 may be the tail side of the body 10, and the multi-rotor aerial vehicle 100 may be flying forward. The torque coefficient K1 of the rotor on the tail side may be greater than the torque coefficient K2 of the rotor on the nose side. At this time, the first rotor 20 may rotate at the first rotational speed of the forward flight, the second rotor 30 may rotate at the second rotational speed of the forward flight, and the absolute value of the difference between the first rotational speed of the forward flight and the second rotational speed of the forward flight may be less than the predetermined value N. Therefore, when the multi-rotor aerial vehicle 100 is flying forward, the frequency band between the propeller frequency of the first rotor 20 and the propeller frequency of the second rotor 30 may be relatively narrow. When the multi-rotor aerial vehicle 100 changes from forward flight to left flight, the first rotor 20 may change from a rotor on the nose side to a rotor on the left side of the body, the second rotor 30 may change from a rotor on the tail side to a rotor on the right side of the body, and the torque coefficient K3 of the rotor on the right side of the body may be greater than the torque coefficient K4 of the rotor on the left side of the body. At this time, the first rotor 20 may rotate at the first rotational speed of the left flight, the second rotor 30 may rotate at the second rotational speed of the left flight, and the absolute value of the difference between the first rotational speed of the left flight and the second rotational speed of the left flight may be less than the predetermined value N. Therefore, when the multi-rotor aerial vehicle 100 flies left, the frequency band between the propeller frequency of the first rotor 20 and the propeller frequency of the second rotor 30 may be relatively narrow. In this way, by changing the torque coefficients of the rotors on the first side 11 and the second side 12, the multi-rotor aerial vehicle 100 can ensure that the frequency band between the propeller frequency of the first rotor 20 and the propeller frequency of the second rotor 30 is relatively narrow in both the forward flight and the left flight. As such, the probability of resonance between the body 10 and the rotor can be relatively low, and the imaging quality of the imaging device 200 can be relatively high. In one example, the first rotational speed of the forward flight may be equal to the first rotational speed of the left flight, and the second rotational speed of the forward flight may be equal to the second rotational speed of the left flight. In addition, the multi-rotor aerial vehicle 100 can change from one flight state to other flight states. For example, the multi-rotor aerial vehicle 100 may change from the forward flight to the right flight, the multi-rotor aerial vehicle 100 may change from the forward flight to the backward flight, the multi-rotor aerial vehicle 100 may change from the left flight to the right flight, etc., all of which can be operated with reference to the foregoing embodiment of changing from the forward flight to the left flight, which will not be repeated here.

The multi-rotor aerial vehicle 100 may change from one flight state to another flight state, and then change to another flight state. For example, the multi-rotor aerial vehicle 100 may change from the forward flight to the left flight, and then change from the left flight to the backward flight. A detailed description will be provided by taking the case where the /10 is changing from the forward flight to the left flight, and then from the left flight to the backward flight as an example. For the multi-rotor aerial vehicle 100 changing from the forward flight to the left flight, reference may be made to the embodiment described above, and no further description will be provided here. When the multi-rotor aerial vehicle 100 has changed from the forward flight to the left flight, and needs to change from the left flight to the backward flight, the first rotor 20 may change from a rotor on the left side of the body to a rotor on the nose side, the second rotor 30 may change from a rotor on the right side of the body to a rotor on the tail side, and the torque coefficient K5 of the rotor on the nose side may be greater than the torque coefficient K6 of the rotor on the tail side. At this time, the first rotor 20 may rotate at the first rotational speed of the backward flight, the second rotor 30 may rotate at the second rotational speed of the backward flight, and the absolute value of the difference between the first rotational speed of the backward flight and the second rotational speed of the backward flight may be less than the predetermined value N. Therefore, when the multi-rotor aerial vehicle 100 is flying backward, the frequency band of the propeller frequency of the first rotor 20 and the propeller frequency of the second rotor 30 can still be relatively narrow. As such, by changing the torque coefficients of the rotors on the first side 11 and the second side 12, the multi-rotor aerial vehicle 100 can ensure that the frequency band between the propeller frequency of the first rotor 20 and the propeller frequency of the second rotor 30 is relatively narrow during the forward flight, the left flight, and the backward flight. As such, the probability of resonance between the body 10 and the rotor can be relatively low, and the imaging quality of the imaging device 200 can be relatively high.. In addition, the multi-rotor aerial vehicle 100 can change from one flight state to another flight state, and then change to another flight state. For example, the multi-rotor aerial vehicle 100 may change from the forward flight to the right flight, the multi-rotor aerial vehicle 100 may change from the forward flight to the right flight, and then change to the backward flight; the multi-rotor aerial vehicle 100 may change from the forward flight to the left flight, and then to the left flight; the multi-rotor aerial vehicle 100 may change from the left flight to the right flight, and then to the forward flight, etc., all of which can be operated with reference to the foregoing embodiment of changing from the forward flight to the left flight, and then from the left flight to the backward flight, which will not be repeated here.

In this embodiment, the number of the first rotor 20 can be more than one, and the number of the second rotor 30 can be more than one. In the embodiment shown in FIG. 1, when the multi-rotor aerial vehicle 100 is an X-shaped quadrotor, the first rotor 20 may be the two rotors disposed at the front side (the nose side) of the body 10, and the second rotor 30 may be the two rotors disposed at the rear side (the tail side) of the body 10; alternatively, the second rotor 30 may be the two rotors disposed at the front side (the nose side) of the body 10, and the first rotor 20 may be the two rotors disposed at the rear side (the tail side) of the body 10. In another example, when the multi-rotor aerial vehicle 100 of the present disclosure is a cross-shaped quadrotor, the first rotor 20 may be the two rotors disposed at the front side (the nose side) and the left side of the body 10, and the second rotor 30 may be the two rotors disposed at the rear side (the tail side) and the right side of the body 10. Of course, the number and mounting method of the first rotor 20 and the second rotor 30 are not limited to the above discussion, and can be adjusted based on actual needs, which is not limited here. In addition, when the number of the first rotors 20 is more than one and the number of the second rotor 30 is also more than one, both the first rotational speed and the third rotational speed may be the average rotational speed of the multiple first rotors 20, and both the second rotational speed and the fourth rotational speed may be the average rotational speed of the multiple second rotors 30.

In this embodiment, the torque coefficient of each rotor may be determined by any one or more of the dimensions of the rotor and the wing shape parameters of the rotor. In other words, each of the size of the rotor and the wing shape parameters of the rotor may affect the torque coefficient of the rotor. More specifically, under the condition of other parameters being the same, if the first rotor 20 and the second rotor 30 are only different in size, the torque coefficient of the first rotor 20 and the torque coefficient of the second rotor 30 may also be different; or, if the first rotor 20 and the second rotor 30 only have different wing shape parameters, the torque coefficient of the first rotor 20 and the torque coefficient of the second rotor 30 may also be different; or, if the size and wing shape parameters of the first rotor 20 and the second rotor 30 are different, the torque coefficient of the first rotor 20 and the torque coefficient of the second rotor 30 may also be different. In this way, the multi-rotor aerial vehicle 100 can adopt different rotor sizes and/or wing shape parameters to mount the first rotor 20 and the second rotor 30 with suitable torque coefficients (for example, the aerial vehicle 100 may adopt different rotor sizes and/or wing shape parameters to realize the torque coefficient of the second rotor 30 being different from the torque coefficient of the first rotor 20).

In the embodiment shown in FIG. 1, the size of the first rotor 20 and the second rotor 30 are different, where the size of the rotor includes the diameter of the rotor. The larger the diameter of the rotor, the greater the torque coefficient of the rotor; and the smaller the diameter of the rotor, the smaller the torque coefficient of the rotor. The diameter of the second rotor 30 may be greater than the diameter of the first rotor 20, and the interaction of the second rotor 30 with air may be greater than the interaction of the first rotor 20 with the air. Therefore, the multi-rotor aerial vehicle 100 flies in the direction from the rotor with the larger diameter toward the rotor with the smaller diameter, that is, when the multi-rotor aerial vehicle 100 flies in the direction from the second side 12 toward the first side 11 or from the first side 11 toward the second side 12, the excitation force frequency band of the multi-rotor aerial vehicle 100 may be narrower than the excitation force frequency band when hovering. This can reduce the possibility of the body 10 resonating with the first rotor 20 or the second rotor 30, and improve the imaging quality of the imaging device 200 carried by the body 10. In other embodiments, when the first side refers to the left side of the body, the second side refers to the right side of the body, the first rotor is the tow rotors on the left, and the second rotor is the two rotors on the right, the size of the second rotor being larger than the size of the first rotor can also realize the torque coefficient of the second rotor being greater than the torque coefficient of the first rotor. As such, when the aerial vehicle flies in a fixed-direction flight (the left flight), the absolute value of the difference between the first rotational speed of the first rotor and the second rotational speed of the second rotor may be relatively small, and the excitation force frequency band may be relatively narrow, thereby reducing the possibility of the body resonating with the first rotor or the second rotor, and improving the imaging quality of the imaging device carried by the body.

In other embodiments, the wing shape parameters of the first rotor 20 and the second rotor 30 may be different, where the wing shape parameters of the rotor may include one or more of the angle of attack, pitch, and chord length. The difference in the wing shape parameters of the first rotor 20 and the second rotor 30 may include one or more of the parameters being different. Take the angle of attack as an example, the larger the angle of attack of the rotor, the larger the windward area of the rotor, and the greater the interaction with the air, the greater the torque coefficient of the rotor; and the smaller the angle of attack of the rotor, the smaller the windward area of the rotor, and the smaller the interaction with the air, the smaller the torque coefficient of the rotor. In one example, the angle of attack of the second rotor 30 may be larger than the angle of attack of the first rotor 20, and the interaction of the second rotor 30 with the air may be greater than the interaction of the first rotor 20 with the air. Therefore, when the multi-rotor aerial vehicle 100 flies in the direction from the rotor with larger angle of attack toward the rotor with small angle of attack, that is, multi-rotor aerial vehicle 100 flies in the direction from the second side 12 toward the first side 11 or from the first side 11 toward the second side 12, the excitation force frequency band of the multi-rotor aerial vehicle 100 may be narrower than the excitation force frequency band when hovering. This can reduce the possibility of the body 10 resonating with the first rotor 20 or the second rotor 30, and improve the imaging quality of the imaging device 200 carried by the body 10. Next, take the pitch as an example. The larger the pitch of the rotor, the greater the torque coefficient of the rotor; and the smaller the pitch of the rotor, the smaller the torque coefficient of the rotor. In another example, the pitch of the second rotor 30 may be larger than the pitch of the first rotor 20. Therefore, when the multi-rotor aerial vehicle 100 flies in the direction from the rotor with the larger pitch toward the rotor with the smaller pitch, that is, multi-rotor aerial vehicle 100 flies in the direction from the second side 12 toward the first side 11 or from the first side 11 toward the second side 12, the excitation force frequency band of the multi-rotor aerial vehicle 100 may be narrower than the excitation force frequency band when hovering. This can reduce the possibility of the body 10 resonating with the first rotor 20 or the second rotor 30, and improve the imaging quality of the imaging device 200 carried by the body 10. Next, take the chord length as an example. The longer the chord length of the rotor, under the same diameter, the larger the cross-section area of the rotor and the greater the interaction with the air; and the shorter the chord length of the rotor, under the same diameter, the smaller the cross-section area of the rotor and the smaller the interaction with the air. In another example, the chord length of the second rotor 30 may be longer than the chord length of the first rotor 20. Therefore, when the multi-rotor aerial vehicle 100 flies in the direction from the rotor with the longer chord length toward the rotor with the shorter chord length, that is, multi-rotor aerial vehicle 100 flies in the direction from the second side 12 toward the first side 11 or from the first side 11 toward the second side 12, the excitation force frequency band of the multi-rotor aerial vehicle 100 may be narrower than the excitation force frequency band when hovering. This can reduce the possibility of the body 10 resonating with the first rotor 20 or the second rotor 30, and improve the imaging quality of the imaging device 200 carried by the body 10.

In this embodiment, the torque coefficient of the rotor may be determined at the factory, or it may be further adjusted during use. More specifically, the torque coefficient of the first rotor 20 may be adjustable, the torque coefficient of the second rotor 30 may be adjustable, or both the torque coefficient of the first rotor 20 and the torque coefficient of the second rotor 30 may be adjustable. For example, a rotor pitch changing device may be disposed on the rotor. The multi-rotor aerial vehicle 100 may use the pitch changing device to change the angle of attack of the first rotor 20 or the second rotor 30 to change the pitch of the first rotor 20 or the 30, thereby adjusting the torque coefficient of the first rotor 20 or the second rotor 30. In the foregoing embodiments, when the multi-rotor aerial vehicle 100 changes its flight state, the original torque coefficient of the first rotor 20 and the original torque coefficient of the second rotor 30 may be changed by using the pitch changing device. A detailed description of how to adjust the torque coefficient of the rotor is provided by taking the quadrotor aerial vehicle changing from the forward flight to the left flight as an example. When the quadrotor aerial vehicle is flying forward, the torque coefficient of the two rotors on the tail side (the second rotor 30) may be K1, the torque coefficient of the two rotors on the nose side (the first rotor 20) may be K2, and K1 may be greater than K2. When the quadrotor aerial vehicle changes to the left flight, the pitch of all the rotors may change such that the torque coefficients of all the rotors may change. More specifically, the pitch of the first rotor 20 originally on the right may change, and the torque coefficient may change to K3, the pitch of the second rotor 30 originally on the right may change, and the torque coefficient may change to K3; and the pitch of the first rotor 20 originally on the left may change, and the torque coefficient may change to K4, the pitch of the second rotor 30 originally on the left may change, and the torque coefficient may change to K4. Therefore, the torque coefficients of the two rotors on the right side of the body may both be K3, the torque coefficients of the two rotors on the left side of the body may both be K4, and K3 may be greater than K4. In one example, K1 can be equal to K3, K2 can be equal to K4, and the pitch of the first rotor 20 originally on the left can remain unchanged. The torque coefficient can still be K1, the pitch of the first rotor 20 can increase, and the torque coefficient can change to K4.

In summary, the multi-rotor aerial vehicle 100 of the embodiments of the present disclosure can adopt the first rotor 20 and the second rotor 30 with different torque coefficients. When the multi-rotor aerial vehicle 100 is in the fixed-direction flight, the first rotor 20 can rotate at a first rotational speed, the second rotor 30 can rotate at a second rotational speed, and the absolute value of the difference between the first rotational speed and the second rotational speed can be relatively small and the excitation force frequency band can be relatively narrow, thereby reducing the probability of the body 10 resonating with the first rotor 20 or the second rotor 30, and improving the imaging quality of the imaging device 200 carried by the body 10.

Referring to FIG. 1 and FIG. 6, an embodiment of the present disclosure provides a multi-rotor aerial vehicle 100 control method. The multi-rotor aerial vehicle 100 of an embodiment of the present disclosure includes a body 10, a first rotor 20, and a second rotor 30. The body 10 includes a first side 11 and a second side 12 opposite to each other. The first rotor 20 may be connected to the first side 11 of the body 10. The second rotor 30 may be connected to the second side 12 of the body 10. The torque coefficient of the second rotor 30 may be different from the torque coefficient of the first rotor 20. When the multi-rotor aerial vehicle 100 is flying in a direction from the second side 12 toward to the first side 11 or flying in a direction from the first side 11 toward to the second side 12, the control method of an embodiment of the present disclosure includes the following steps.

S1, controlling the first rotor 20 to rotate at a first rotational speed.

S2, controlling the second rotor 30 to rotate at a second rotational speed, where the absolute value of the difference between the first rotational speed and the second rotational speed is less than a predetermined value N.

More specifically, the multi-rotor aerial vehicle 100 of the embodiments of the present disclosure may be a quad-rotor aerial vehicle, a hexa-rotor aerial vehicle, or an octo-rotor aerial vehicle, etc., which is not limited here. Referring to both FIG. 1 and FIG. 2, the multi-rotor aerial vehicle 100 of this embodiment takes a quad-rotor aerial vehicle as an example, which can be equipped with an imaging device 200. The imaging device 200 can be used to capture images or videos when the multi-rotor aerial vehicle 100 is flying or hovering. The imaging device 200 may be mounted on a gimbal 300, and the gimbal 300 may be fixedly connected to the body 10. The gimbal 300 can provide a suitable imaging angle for the imaging device 200. When the body 10 of the multi-rotor aerial vehicle 100 vibrates greatly, the imaging device 200 also vibrates greatly, and the imaging quality of the imaging device 200 is poor. Especially for a high-power optical zoom lens, a slight vibration of the body 10 may cause significant shaking of the captured image, which affects the quality of the imaging.

Both the first rotor 20 and the second rotor 30 may be connected to the body 10 through an arm 50. The torque coefficient of the second rotor 30 may be different from the torque coefficient of the first rotor 20. The torque coefficient may refer to the magnitude of the interaction between the rotor and the air. The smaller the torque coefficient, the smaller the interaction between the rotor and the air. For example, the torque coefficient of the first rotor 20 is smaller than the torque coefficient of the second rotor 30 indicates that the interaction of the first rotor 20 with the air is smaller than the interaction of the second rotor 30 with the air.

The multi-rotor aerial vehicle 100 may also include a drive assembly (not shown in FIGs.) disposed on the arm 50. The drive assembly can be used to apply an exciting force to the first rotor 20 and the second rotor 30 to drive the first rotor 20 and the second rotor 30 to rotate. The drive assembly may include a plurality of driving motors. The plurality of driving motors may be fixedly connected to the first rotor 20 and the second rotor 30 respectively. Driven by the drive assembly, the first rotor 20 may rotate at a certain speed, and the second rotor 30 may rotate at a certain speed. In the present embodiment, when the multi-rotor aerial vehicle 100 flies toward a direction from the second side 12 toward to the first side 11, the first rotor 20 may rotate at the first rotational speed, the second rotor 30 may rotate at the second rotational speed, and the absolute value of the difference between the first rotational speed and the second rotational speed may be less than the predetermined value N. When the multi-rotor aerial vehicle 100 flies toward a direction from the first side 11 toward to the second side 12, the first rotor 20 may rotate at the first rotational speed, the second rotor 30 may rotate at the second rotational speed, and the absolute value of the difference between the first rotational speed and the second rotational speed may be less than the predetermined value N. The propeller frequency of the first rotor 20 and the propeller frequency of the second rotor 30 may be respectively equal to the excitation force frequency of the corresponding drive motor. The greater the rotational speed of the drive motor, the greater the rotational speed of the corresponding rotor, and the greater the rotor frequency.

The multi-rotor aerial vehicle 100 needs to have the effect of the horizontal component moment to fly in a fixed-direction flight. Referring to FIG. 3, in the conventional multi-rotor aerial vehicle, since the torque coefficients of the multiple rotors are equal, when the multi-rotor aerial vehicle is flying, e.g., flying forward, the absolute value of the difference between the rotational speed of the rotor on the nose side and the rotational speed of the rotor on the tail side may be large. The frequency band between the propeller frequency of the rotor on the nose side and the propeller frequency of the rotor on the tail side may be relatively wide, resulting in a higher probability of coupling between the excitation force band frequency band and neutral frequency of the body, and a higher probability of resonance between the body and the rotor. Therefore, in the present embodiment, the torque coefficient of the second rotor 30 may be different from the torque coefficient of the first rotor 20. For example, the torque coefficient of the second rotor 30 may be greater than the torque coefficient of the first rotor 20, or the torque coefficient of the second rotor 30 may be less than the torque coefficient of the first rotor 20. Referring to FIG. 2 and FIG. 4, when the multi-rotor aerial vehicle 100 is flying from the second side 12 toward the first side 11 (the X direction as shown in FIG. 2), since the absolute value of the difference between the first rotational speed and the second rotational speed is less than the predetermined value N, therefore, the frequency band between the propeller frequency of the first rotor 20 and the propeller frequency of the second rotor 30 may be relatively narrow, and the smaller the predetermined value, the narrower the frequency band between the two propeller frequencies. At this time, the probability of the excitation force frequency band coupling with the natural frequency of the body 10 may be low, and the probability of the body 10 resonating with the rotor may be low. In the present embodiment, the predetermined value N may be adjusted based on a parameter condition of the rotor of the multi-rotor aerial vehicle 100. For example, the predetermined value N may be less than or equal to 50, 100, 150 revolutions per minutes (RPM), etc., then the absolute value of the difference between the first rotational speed and the second rotational speed may be any value in [0, N]. For example, when N = 50 RPM, the absolute value of the difference between the first rotational speed and the second rotational speed may be any value such as 1, 10, 30, 45, 48, 50 RPM, etc. In another example, when N = 100 RPM, the absolute value of the difference between the first rotational speed and the second rotational speed may be any value such as 0, 30, 50, 70, 90, 95 RPM, etc. In another example, when N = 150 RPM, the absolute value of the difference between the first rotational speed and the second rotational speed may be any value such as 0, 25, 50, 100, 120, 140 RPM, etc. In this way, the vibration can be relatively small when the multi-rotor aerial vehicle 100 flies with the first rotor 20 and the second rotor 30 having the same or similar rotational speed and in a direction from the second side 12 toward the first side 11 or in a direction from the first side 11 toward the second side 12, and the imaging quality of the imaging device 200 can be relatively high. In addition, the predetermined value N may be close to zero. It can be understood that may also be set based on actual needs, such as less than or equal to 20 revolution per second (RPS), less than 30 RPS, etc., which is not limited in this embodiment.

Referring to FIG. 5 and FIG. 7, in this embodiment, when the multi-rotor aerial vehicle 100 is hovering, the multi-rotor aerial vehicle 100 control method further includes the following steps.

S3, controlling the first rotor 20 to rotate at a third rotational speed.

S4, controlling the second rotor 30 to rotate at a fourth rotational speed, where the absolute value of the different between the first rotational speed and the second rotational speed is less than the absolute value of the difference between the third rotational speed and the fourth rotational speed.

Since the torque coefficient of the first rotor 20 may be less than the torque coefficient of the second rotor 30, the interaction of the first rotor 20 with the air may be less than the interaction of the second rotor 30 with the air. Driven by the same power of the driving motor, when the first rotor 20 rotates at the third rotational speed, the second rotor 30 rotates at the fourth rotational speed, and the third rotational speed is greater than the fourth rotational speed, the pulling force generated by the first rotor 20 can be ensured to equal to the pulling force generated by the second rotor 30. In this way, the body 10 can be balanced and the multi-rotor aerial vehicle 100 can hover.

Referring to FIG. 1, in this embodiment, when the torque coefficient of the second rotor 30 is greater than the torque coefficient of the first rotor 20, the first side 11 may be the nose side of the body 10, the second side 12 may be the tail side of the body 10, and the multi-rotor aerial vehicle 100 flying in the direction from the second side 12 toward the first side 11 may indicate that the multi-rotor aerial vehicle 100 is in the forward flight state (as shown in FIG. 2). At this time, the first rotor 20 mat rotate at the first rotational speed, the second rotor 30 may rotate at the second rotational speed, and the absolute value of the difference between the first rotational speed and the second rotational speed may be less than the predetermined value N. When the multi-rotor aerial vehicle 100 is hovering (shown in FIG. 5), the first rotor 20 may rotate at a third rotational speed, the second rotor 30 may rotate at a fourth rotational speed, where the absolute value of the difference between the first rotational speed and the second rotational speed may be less than the difference between the third rotational speed and the fourth rotational speed. Therefore, when the multi-rotor aerial vehicle 100 is flying forward, since the absolute value of the difference between the first rotational speed and the second rotational speed may be less than the absolute value of the difference between the third rotational speed and the fourth rotational speed, the frequency band between the propeller frequency of the first rotor 20 and the propeller frequency of the second rotor 30 may be narrower than when hovering. The probability of the body 10 and the rotor resonating may be lower, thereby reducing the probability of the body 10 and the rotor resonating and causing poor imaging effect.

In other embodiments, when the torque coefficient of the second rotor 30 is less than the torque coefficient of the first rotor 20, the first side 11 may be the nose side of the body 10, the second side 12 may be the tail side of the body 10, and the multi-rotor aerial vehicle 100 flying in the direction from the first side 11 toward the second side 12 may indicate that the multi-rotor aerial vehicle 100 is the backward flight state. At this time, the first rotor 20 mat rotate at the first rotational speed, the second rotor 30 may rotate at the second rotational speed, and the absolute value of the difference between the first rotational speed and the second rotational speed may be less than the predetermined value N. When the multi-rotor aerial vehicle 100 is hovering, the first rotor 20 may rotate at the third rotational speed, the second rotor 30 may rotate at the fourth rotational speed, where the absolute value of the difference between the first rotational speed and the second rotational speed may be less than the difference between the third rotational speed and the fourth rotational speed. Therefore, when the multi-rotor aerial vehicle 100 is flying backward, since the absolute value of the difference between the first rotational speed and the second rotational speed may be less than the absolute value of the difference between the third rotational speed and the fourth rotational speed, the frequency band between the propeller frequency of the first rotor 20 and the propeller frequency of the second rotor 30 may be narrower than when hovering and the probability of the body 10 and the rotor resonating may be lower.

In other embodiments, when the torque coefficient of the second rotor 30 is greater than the torque coefficient of the first rotor 20, the first side 11 may be the left side of the body 10, the second side 12 may be the right side of the body 10, and the multi-rotor aerial vehicle 100 flying in the direction from the second side 12 toward the first side 11 may indicate that the multi-rotor aerial vehicle 100 is the left flight state. At this time, the first rotor 20 mat rotate at the first rotational speed, the second rotor 30 may rotate at the second rotational speed, and the absolute value of the difference between the first rotational speed and the second rotational speed may be less than the predetermined value N. When the multi-rotor aerial vehicle 100 is hovering, the first rotor 20 may rotate at the third rotational speed, the second rotor 30 may rotate at the fourth rotational speed, where the absolute value of the difference between the first rotational speed and the second rotational speed may be less than the difference between the third rotational speed and the fourth rotational speed. Therefore, when the multi-rotor aerial vehicle 100 flies left, since the absolute value of the difference between the first rotational speed and the second rotational speed may be less than the absolute value of the difference between the third rotational speed and the fourth rotational speed, the frequency band between the propeller frequency of the first rotor 20 and the propeller frequency of the second rotor 30 may be narrower than when hovering and the probability of the body 10 and the rotor resonating may be lower.

In other embodiments, when the torque coefficient of the second rotor 30 is less than the torque coefficient of the first rotor 20, the first side 11 may be the left side of the body 10, the second side 12 may be the right side of the body 10, and the multi-rotor aerial vehicle 100 flying in the direction from the first side 11 toward the second side 12 may indicate that the multi-rotor aerial vehicle 100 is the right flight state. At this time, the first rotor 20 mat rotate at the first rotational speed, the second rotor 30 may rotate at the second rotational speed, and the absolute value of the difference between the first rotational speed and the second rotational speed may be less than the predetermined value N. When the multi-rotor aerial vehicle 100 is hovering, the first rotor 20 may rotate at the third rotational speed, the second rotor 30 may rotate at the fourth rotational speed, where the absolute value of the difference between the first rotational speed and the second rotational speed may be less than the difference between the third rotational speed and the fourth rotational speed. Therefore, when the multi-rotor aerial vehicle 100 flies right, since the absolute value of the difference between the first rotational speed and the second rotational speed may be less than the absolute value of the difference between the third rotational speed and the fourth rotational speed, the frequency band between the propeller frequency of the first rotor 20 and the propeller frequency of the second rotor 30 may be narrower than when hovering and the probability of the body 10 and the rotor resonating may be lower.

Of course, in addition to the first side 11 and the second side 12 of the multi-rotor aerial vehicle 100 being a fixed side of the body 10, during the flight of the multi-rotor aerial vehicle 100, the first side 11 and the second side 12 may also change based on the flight state of the multi-rotor aerial vehicle 100. For example, the multi-rotor aerial vehicle 100 may change from one flight state to another flight state, or the multi-rotor aerial vehicle 100 may change from one flight to another flight state, and then change to another flight state. Regardless of type of flight state change, the first rotor 20 and the second rotor 30 may also change, correspondingly, the original torque coefficient of the first rotor 20 and the torque coefficient of the second rotor 30 may also change.

The multi-rotor aerial vehicle 100 may change from one flight state to another, for example, the multi-rotor aerial vehicle 100 may change from the forward flight to the left flight. A detailed description will be provided below by taking the multi-rotor aerial vehicle 100 changing from the forward flight to the left flight as an example. At the initial moment, the first side 11 may be the nose side of the body 10, the second side 12 may be the tail side of the body 10, and the multi-rotor aerial vehicle 100 may be flying forward. The torque coefficient K1 of the rotor on the tail side may be greater than the torque coefficient K2 of the rotor on the nose side. At this time, the first rotor 20 may rotate at the first rotational speed of the forward flight, the second rotor 30 may rotate at the second rotational speed of the forward flight, and the absolute value of the difference between the first rotational speed of the forward flight and the second rotational speed of the forward flight may be less than the predetermined value N. Therefore, when the multi-rotor aerial vehicle 100 is flying forward, the frequency band between the propeller frequency of the first rotor 20 and the propeller frequency of the second rotor 30 may be relatively narrow. When the multi-rotor aerial vehicle 100 changes from forward flight to left flight, the first rotor 20 may change from a rotor on the nose side to a rotor on the left side of the body, the second rotor 30 may change from a rotor on the tail side to a rotor on the right side of the body, and the torque coefficient K3 of the rotor on the right side of the body may be greater than the torque coefficient K4 of the rotor on the left side of the body. At this time, the first rotor 20 may rotate at the first rotational speed of the left flight, the second rotor 30 may rotate at the second rotational speed of the left flight, and the absolute value of the difference between the first rotational speed of the left flight and the second rotational speed of the left flight may be less than the predetermined value N. Therefore, when the multi-rotor aerial vehicle 100 flies left, the frequency band between the propeller frequency of the first rotor 20 and the propeller frequency of the second rotor 30 may be relatively narrow. In this way, by changing the torque coefficients of the rotors on the first side 11 and the second side 12, the multi-rotor aerial vehicle 100 can ensure that the frequency band between the propeller frequency of the first rotor 20 and the propeller frequency of the second rotor 30 is relatively narrow in both the forward flight and the left flight. As such, the probability of resonance between the body 10 and the rotor can be relatively low, and the imaging quality of the imaging device 200 can be relatively high. In one example, the first rotational speed of the forward flight may be equal to the first rotational speed of the left flight, and the second rotational speed of the forward flight may be equal to the second rotational speed of the left flight. In addition, the multi-rotor aerial vehicle 100 can change from one flight state to other flight states. For example, the multi-rotor aerial vehicle 100 may change from the forward flight to the right flight, the multi-rotor aerial vehicle 100 may change from the forward flight to the backward flight, the multi-rotor aerial vehicle 100 may change from the left flight to the right flight, etc., all of which can be operated with reference to the foregoing embodiment of changing from the forward flight to the left flight, which will not be repeated here.

The multi-rotor aerial vehicle 100 may change from one flight state to another flight state, and then change to another flight state. For example, the multi-rotor aerial vehicle 100 may change from the forward flight to the left flight, and then change from the left flight to the backward flight. A detailed description will be provided by taking the case where the /10 is changing from the forward flight to the left flight, and then from the left flight to the backward flight as an example. For the multi-rotor aerial vehicle 100 changing from the forward flight to the left flight, reference may be made to the embodiment described above, and no further description will be provided here. When the multi-rotor aerial vehicle 100 has changed from the forward flight to the left flight, and needs to change from the left flight to the backward flight, the first rotor 20 may change from a rotor on the left side of the body to a rotor on the nose side, the second rotor 30 may change from a rotor on the right side of the body to a rotor on the tail side, and the torque coefficient K5 of the rotor on the nose side may be greater than the torque coefficient K6 of the rotor on the tail side. At this time, the first rotor 20 may rotate at the first rotational speed of the backward flight, the second rotor 30 may rotate at the second rotational speed of the backward flight, and the absolute value of the difference between the first rotational speed of the backward flight and the second rotational speed of the backward flight may be less than the predetermined value N. Therefore, when the multi-rotor aerial vehicle 100 is flying backward, the frequency band of the propeller frequency of the first rotor 20 and the propeller frequency of the second rotor 30 can still be relatively narrow. As such, by changing the torque coefficients of the rotors on the first side 11 and the second side 12, the multi-rotor aerial vehicle 100 can ensure that the frequency band between the propeller frequency of the first rotor 20 and the propeller frequency of the second rotor 30 is relatively narrow during the forward flight, the left flight, and the backward flight. As such, the probability of resonance between the body 10 and the rotor can be relatively low, and the imaging quality of the imaging device 200 can be relatively high.. In addition, the multi-rotor aerial vehicle 100 can change from one flight state to another flight state, and then change to another flight state. For example, the multi-rotor aerial vehicle 100 may change from the forward flight to the right flight, the multi-rotor aerial vehicle 100 may change from the forward flight to the right flight, and then change to the backward flight; the multi-rotor aerial vehicle 100 may change from the forward flight to the left flight, and then to the left flight; the multi-rotor aerial vehicle 100 may change from the left flight to the right flight, and then to the forward flight, etc., all of which can be operated with reference to the foregoing embodiment of changing from the forward flight to the left flight, and then from the left flight to the backward flight, which will not be repeated here.

In this embodiment, the number of the first rotor 20 can be more than one, and the number of the second rotor 30 can be more than one. In the embodiment shown in FIG. 1, when the multi-rotor aerial vehicle 100 is an X-shaped quadrotor, the first rotor 20 may be the two rotors disposed at the front side (the nose side) of the body 10, and the second rotor 30 may be the two rotors disposed at the rear side (the tail side) of the body 10; alternatively, the second rotor 30 may be the two rotors disposed at the front side (the nose side) of the body 10, and the first rotor 20 may be the two rotors disposed at the rear side (the tail side) of the body 10. In another example, when the multi-rotor aerial vehicle 100 of the present disclosure is a cross-shaped quadrotor, the first rotor 20 may be the two rotors disposed at the front side (the nose side) and the left side of the body 10, and the second rotor 30 may be the two rotors disposed at the rear side (the tail side) and the right side of the body 10. Of course, the number and mounting method of the first rotor 20 and the second rotor 30 are not limited to the above discussion, and can be adjusted based on actual needs, which is not limited here. In addition, when the number of the first rotors 20 is more than one and the number of the second rotor 30 is also more than one, both the first rotational speed and the third rotational speed may be the average rotational speed of the multiple first rotors 20, and both the second rotational speed and the fourth rotational speed may be the average rotational speed of the multiple second rotors 30.

In this embodiment, the torque coefficient of each rotor may be determined by any one or more of the dimensions of the rotor and the wing shape parameters of the rotor. In other words, each of the size of the rotor and the wing shape parameters of the rotor may affect the torque coefficient of the rotor. More specifically, under the condition of other parameters being the same, if the first rotor 20 and the second rotor 30 are only different in size, the torque coefficient of the first rotor 20 and the torque coefficient of the second rotor 30 may also be different; or, if the first rotor 20 and the second rotor 30 only have different wing shape parameters, the torque coefficient of the first rotor 20 and the torque coefficient of the second rotor 30 may also be different; or, if the size and wing shape parameters of the first rotor 20 and the second rotor 30 are different, the torque coefficient of the first rotor 20 and the torque coefficient of the second rotor 30 may also be different. In this way, the multi-rotor aerial vehicle 100 can adopt different rotor sizes and/or wing shape parameters to mount the first rotor 20 and the second rotor 30 with suitable torque coefficients (for example, the aerial vehicle 100 may adopt different rotor sizes and/or wing shape parameters to realize the torque coefficient of the second rotor 30 being different from the torque coefficient of the first rotor 20).

In the embodiment shown in FIG. 1, the size of the first rotor 20 and the second rotor 30 are different, where the size of the rotor includes the diameter of the rotor. The larger the diameter of the rotor, the greater the torque coefficient of the rotor; and the smaller the diameter of the rotor, the smaller the torque coefficient of the rotor. The diameter of the second rotor 30 may be greater than the diameter of the first rotor 20, and the interaction of the second rotor 30 with air may be greater than the interaction of the first rotor 20 with the air. Therefore, the multi-rotor aerial vehicle 100 flies in the direction from the rotor with the larger diameter toward the rotor with the smaller diameter, that is, when the multi-rotor aerial vehicle 100 flies in the direction from the second side 12 toward the first side 11 or from the first side 11 toward the second side 12, the excitation force frequency band of the multi-rotor aerial vehicle 100 may be narrower than the excitation force frequency band when hovering. This can reduce the possibility of the body 10 resonating with the first rotor 20 or the second rotor 30, and improve the imaging quality of the imaging device 200 carried by the body 10. In other embodiments, when the first side refers to the left side of the body, the second side refers to the right side of the body, the first rotor is the tow rotors on the left, and the second rotor is the two rotors on the right, the size of the second rotor being larger than the size of the first rotor can also realize the torque coefficient of the second rotor being greater than the torque coefficient of the first rotor. As such, when the aerial vehicle flies in a fixed-direction flight (the left flight), the absolute value of the difference between the first rotational speed of the first rotor and the second rotational speed of the second rotor may be relatively small, and the excitation force frequency band may be relatively narrow, thereby reducing the possibility of the body resonating with the first rotor or the second rotor, and improving the imaging quality of the imaging device carried by the body.

In other embodiments, the wing shape parameters of the first rotor 20 and the second rotor 30 may be different, where the wing shape parameters of the rotor may include one or more of the angle of attack, pitch, and chord length. The difference in the wing shape parameters of the first rotor 20 and the second rotor 30 may include one or more of the parameters being different. Take the angle of attack as an example, the larger the angle of attack of the rotor, the larger the windward area of the rotor, and the greater the interaction with the air, the greater the torque coefficient of the rotor; and the smaller the angle of attack of the rotor, the smaller the windward area of the rotor, and the smaller the interaction with the air, the smaller the torque coefficient of the rotor. In one example, the angle of attack of the second rotor 30 may be larger than the angle of attack of the first rotor 20, and the interaction of the second rotor 30 with the air may be greater than the interaction of the first rotor 20 with the air. Therefore, when the multi-rotor aerial vehicle 100 flies in the direction from the rotor with larger angle of attack toward the rotor with small angle of attack, that is, multi-rotor aerial vehicle 100 flies in the direction from the second side 12 toward the first side 11 or from the first side 11 toward the second side 12, the excitation force frequency band of the multi-rotor aerial vehicle 100 may be narrower than the excitation force frequency band when hovering. This can reduce the possibility of the body 10 resonating with the first rotor 20 or the second rotor 30, and improve the imaging quality of the imaging device 200 carried by the body 10. Next, take the pitch as an example. The larger the pitch of the rotor, the greater the torque coefficient of the rotor; and the smaller the pitch of the rotor, the smaller the torque coefficient of the rotor. In another example, the pitch of the second rotor 30 may be larger than the pitch of the first rotor 20. Therefore, when the multi-rotor aerial vehicle 100 flies in the direction from the rotor with the larger pitch toward the rotor with the smaller pitch, that is, multi-rotor aerial vehicle 100 flies in the direction from the second side 12 toward the first side 11 or from the first side 11 toward the second side 12, the excitation force frequency band of the multi-rotor aerial vehicle 100 may be narrower than the excitation force frequency band when hovering. This can reduce the possibility of the body 10 resonating with the first rotor 20 or the second rotor 30, and improve the imaging quality of the imaging device 200 carried by the body 10. Next, take the chord length as an example. The longer the chord length of the rotor, under the same diameter, the larger the cross-section area of the rotor and the greater the interaction with the air; and the shorter the chord length of the rotor, under the same diameter, the smaller the cross-section area of the rotor and the smaller the interaction with the air. In another example, the chord length of the second rotor 30 may be longer than the chord length of the first rotor 20. Therefore, when the multi-rotor aerial vehicle 100 flies in the direction from the rotor with the longer chord length toward the rotor with the shorter chord length, that is, multi-rotor aerial vehicle 100 flies in the direction from the second side 12 toward the first side 11 or from the first side 11 toward the second side 12, the excitation force frequency band of the multi-rotor aerial vehicle 100 may be narrower than the excitation force frequency band when hovering. This can reduce the possibility of the body 10 resonating with the first rotor 20 or the second rotor 30, and improve the imaging quality of the imaging device 200 carried by the body 10.

In this embodiment, the torque coefficient of the rotor may be determined at the factory, or it may be further adjusted during use. More specifically, the torque coefficient of the first rotor 20 may be adjustable, the torque coefficient of the second rotor 30 may be adjustable, or both the torque coefficient of the first rotor 20 and the torque coefficient of the second rotor 30 may be adjustable. For example, a rotor pitch changing device may be disposed on the rotor. The multi-rotor aerial vehicle 100 may use the pitch changing device to change the angle of attack of the first rotor 20 or the second rotor 30 to change the pitch of the first rotor 20 or the 30, thereby adjusting the torque coefficient of the first rotor 20 or the second rotor 30. In the foregoing embodiments, when the multi-rotor aerial vehicle 100 changes its flight state, the original torque coefficient of the first rotor 20 and the original torque coefficient of the second rotor 30 may be changed by using the pitch changing device. A detailed description of how to adjust the torque coefficient of the rotor is provided by taking the quadrotor aerial vehicle changing from the forward flight to the left flight as an example. When the quadrotor aerial vehicle is flying forward, the torque coefficient of the two rotors on the tail side (the second rotor 30) may be K1, the torque coefficient of the two rotors on the nose side (the first rotor 20) may be K2, and K1 may be greater than K2. When the quadrotor aerial vehicle changes to the left flight, the pitch of all the rotors may change such that the torque coefficients of all the rotors may change. More specifically, the pitch of the first rotor 20 originally on the right may change, and the torque coefficient may change to K3, the pitch of the second rotor 30 originally on the right may change, and the torque coefficient may change to K3; and the pitch of the first rotor 20 originally on the left may change, and the torque coefficient may change to K4, the pitch of the second rotor 30 originally on the left may change, and the torque coefficient may change to K4. Therefore, the torque coefficients of the two rotors on the right side of the body may both be K3, the torque coefficients of the two rotors on the left side of the body may both be K4, and K3 may be greater than K4. In one example, K1 can be equal to K3, K2 can be equal to K4, and the pitch of the first rotor 20 originally on the left can remain unchanged. The torque coefficient can still be K1, the pitch of the first rotor 20 can increase, and the torque coefficient can change to K4.

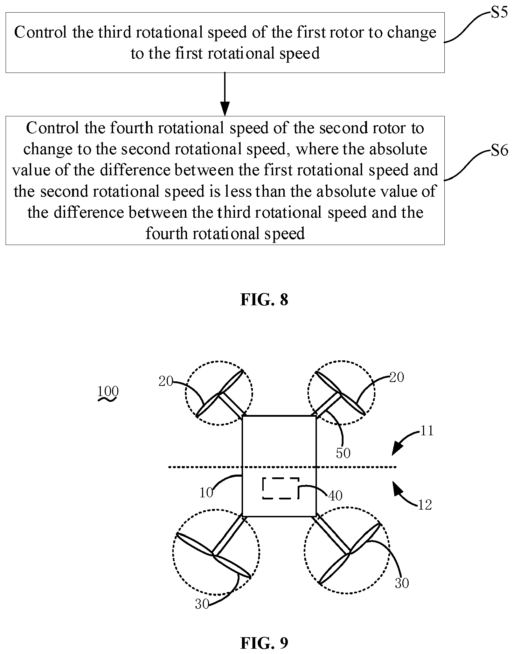

Referring to FIG. 1 and FIG. 8, the control method of the multi-rotor aerial vehicle 100 according to an embodiment of the present disclosure further includes the following steps.

S5, controlling the third rotational speed of the first rotor 20 to change to the first rotational speed.

S6, controlling the fourth rotational speed of the second rotor 30 to change to the second rotational speed, where the absolute value of the difference between the first rotational speed and the second rotational speed is less than the absolute value of the difference between the third rotational speed and the fourth rotational speed to cause the multi-rotor aerial vehicle 100 to change from hovering to flying from the second side toward the first side.

More specifically, when the multi-rotor aerial vehicle 100 is hovering, since the absolute value of the difference between the third rotational speed and the third rotational speed is relatively large, the third rotational speed and the fourth rotational speed may need to be adjusted. By controlling the speed of the driving motor connected to the first rotor 20 to reduce to reduce the speed of the first rotor 20 and controlling the speed of the driving motor connected to the second rotor 30 to increase to increase the speed of the second rotor 30, the third rotational speed of the first rotor 20 can change to the first rotational speed, the fourth rotational speed can change to the second rotational speed, and the absolute value of the difference between the first rotational speed and the second rotational speed can be less than the absolute value of the difference between the third rotational speed and the fourth rotational speed when hovering. In addition, when hovering, the pulling of the first rotor 20 may be similar to the pulling force of the second rotor 30. After adjusting the third rotational speed and the fourth rotational speed, the pulling force of the first rotor 20 may decrease, and the pulling force of the second rotor 30 may increase. As a result, the multi-rotor aerial vehicle 100 is subjected to the horizontal component moment of the second rotor 30 pointing toward the first rotor 20, such that the multi-rotor aerial vehicle 100 can from the second side 12 toward the first side 11. In this way, the multi-rotor aerial vehicle 100 can change from the hovering state to the fixed-direction flight state.

Further, when the absolute value of the difference between the first rotational speed and the second rotational speed is still greater than the predetermined value, continue controlling the speed of the driving motor connected to the first rotor 20 to reduce to reduce the speed of the first rotor 20 and controlling the speed of the driving motor connected to the second rotor 30 to increase to increase the speed of the second rotor 30, until the absolute value of the difference between the first rotational speed and second rotational speed is less than the predetermined value. In this embodiment, the predetermined value may be set to a relatively small value, such that the propeller frequency of the first rotor 20 and the propeller frequency of the second rotor 30 of the multi-rotor aerial vehicle 100 in the fixed-direction flight may be similar, the excitation force frequency may be relatively narrow, thereby reducing the probability of the body 10 resonating with the first rotor 20 or the second rotor 30, and improving the imaging quality of the imaging device 200.

In summary, in the control method of the multi-rotor aerial vehicle 100 according to an embodiment of the present disclosure, the first rotor 20 and the second rotor 30 can have different torque coefficients. During the fixed-direction flight of the multi-rotor aerial vehicle 100, the first rotor 20 can be controlled to rotate at the first rotational speed, the second rotor 30 can be controlled to rotate at the second rotational speed, and the absolute value of the difference between the first rotational speed and the second rotational speed can be relatively small, the excitation force frequency may be relatively narrow, thereby reducing the probability of the body 10 resonating with the first rotor 20 or the second rotor 30, and improving the imaging quality of the imaging device 200 carried by the body 10.

Referring to FIG. 6 and FIG. 9, an embodiment of the present disclosure further provides a multi-rotor aerial vehicle 100 including a flight control system 40. The multi-rotor aerial vehicle 100 includes a body 10, a first rotor 20, a second rotor 30, and a flight control system 40. The body 10 includes a first side 11 and a second side 12 opposite to each other. The first rotor 20 may be connected to the first side 11 of the body 10. The second rotor 30 may be connected to the second side 12 of the body 10. The torque coefficient of the second rotor 30 may be different from the torque coefficient of the first rotor 20. When the multi-rotor aerial vehicle 100 is flying in a direction from the second side 12 toward to the first side 11 or flying in a direction from the first side 11 toward to the second side 12, the flight control system 40 may be used to control the first rotor 20 to rotate at a first rotational speed, control the second rotor 30 to rotate at a second rotational speed, where the absolute value of the difference between the first rotational speed and the second rotational speed may be less than a predetermined value N. That is, the flight control system 40 can be used to implement the processes at S1 and S2.

More specifically, the multi-rotor aerial vehicle 100 of the embodiments of the present disclosure may be a quad-rotor aerial vehicle, a hexa-rotor aerial vehicle, or an octo-rotor aerial vehicle, etc., which is not limited here. Referring to both FIG. 1 and FIG. 2, the multi-rotor aerial vehicle 100 of this embodiment takes a quad-rotor aerial vehicle as an example, which can be equipped with an imaging device 200. The imaging device 200 can be used to capture images or videos when the multi-rotor aerial vehicle 100 is flying or hovering. The imaging device 200 may be mounted on a gimbal 300, and the gimbal 300 may be fixedly connected to the body 10. The gimbal 300 can provide a suitable imaging angle for the imaging device 200. When the body 10 of the multi-rotor aerial vehicle 100 vibrates greatly, the imaging device 200 also vibrates greatly, and the imaging quality of the imaging device 200 is poor. Especially for a high-power optical zoom lens, a slight vibration of the body 10 may cause significant shaking of the captured image, which affects the quality of the imaging.

Both the first rotor 20 and the second rotor 30 may be connected to the body 10 through an arm 50. The torque coefficient of the second rotor 30 may be different from the torque coefficient of the first rotor 20. The torque coefficient may refer to the magnitude of the interaction between the rotor and the air. The smaller the torque coefficient, the smaller the interaction between the rotor and the air. For example, the torque coefficient of the first rotor 20 is smaller than the torque coefficient of the second rotor 30 indicates that the interaction of the first rotor 20 with the air is smaller than the interaction of the second rotor 30 with the air.

The multi-rotor aerial vehicle 100 may also include a drive assembly (not shown in FIGs.) disposed on the arm 50. The drive assembly can be used to apply an exciting force to the first rotor 20 and the second rotor 30 to drive the first rotor 20 and the second rotor 30 to rotate. The drive assembly may include a plurality of driving motors. The plurality of driving motors may be fixedly connected to the first rotor 20 and the second rotor 30 respectively. Driven by the drive assembly, the first rotor 20 may rotate at a certain speed, and the second rotor 30 may rotate at a certain speed. In the present embodiment, when the multi-rotor aerial vehicle 100 flies toward a direction from the second side 12 toward to the first side 11, the first rotor 20 may rotate at the first rotational speed, the second rotor 30 may rotate at the second rotational speed, and the absolute value of the difference between the first rotational speed and the second rotational speed may be less than the predetermined value N. When the multi-rotor aerial vehicle 100 flies toward a direction from the first side 11 toward to the second side 12, the first rotor 20 may rotate at the first rotational speed, the second rotor 30 may rotate at the second rotational speed, and the absolute value of the difference between the first rotational speed and the second rotational speed may be less than the predetermined value N. The propeller frequency of the first rotor 20 and the propeller frequency of the second rotor 30 may be respectively equal to the excitation force frequency of the corresponding drive motor. The greater the rotational speed of the drive motor, the greater the rotational speed of the corresponding rotor, and the greater the rotor frequency.

The multi-rotor aerial vehicle 100 needs to have the effect of the horizontal component moment to fly in a fixed-direction flight. Referring to FIG. 3, in the conventional multi-rotor aerial vehicle, since the torque coefficients of the multiple rotors are equal, when the multi-rotor aerial vehicle is flying, e.g., flying forward, the absolute value of the difference between the rotational speed of the rotor on the nose side and the rotational speed of the rotor on the tail side may be large. The frequency band between the propeller frequency of the rotor on the nose side and the propeller frequency of the rotor on the tail side may be relatively wide, resulting in a higher probability of coupling between the excitation force band frequency band and neutral frequency of the body, and a higher probability of resonance between the body and the rotor. Therefore, in the present embodiment, the torque coefficient of the second rotor 30 may be different from the torque coefficient of the first rotor 20. For example, the torque coefficient of the second rotor 30 may be greater than the torque coefficient of the first rotor 20, or the torque coefficient of the second rotor 30 may be less than the torque coefficient of the first rotor 20. Referring to FIG. 2 and FIG. 4, when the multi-rotor aerial vehicle 100 is flying from the second side 12 toward the first side 11 (the X direction as shown in FIG. 2), since the absolute value of the difference between the first rotational speed and the second rotational speed is less than the predetermined value N, therefore, the frequency band between the propeller frequency of the first rotor 20 and the propeller frequency of the second rotor 30 may be relatively narrow, and the smaller the predetermined value, the narrower the frequency band between the two propeller frequencies. At this time, the probability of the excitation force frequency band coupling with the natural frequency of the body 10 may be low, and the probability of the body 10 resonating with the rotor may be low. In the present embodiment, the predetermined value N may be adjusted based on a parameter condition of the rotor of the multi-rotor aerial vehicle 100. For example, the predetermined value N may be less than or equal to 50, 100, 150 revolutions per minutes (RPM), etc., then the absolute value of the difference between the first rotational speed and the second rotational speed may be any value in [0, N]. For example, when N = 50 RPM, the absolute value of the difference between the first rotational speed and the second rotational speed may be any value such as 1, 10, 30, 45, 48, 50 RPM, etc. In another example, when N = 100 RPM, the absolute value of the difference between the first rotational speed and the second rotational speed may be any value such as 0, 30, 50, 70, 90, 95 RPM, etc. In another example, when N = 150 RPM, the absolute value of the difference between the first rotational speed and the second rotational speed may be any value such as 0, 25, 50, 100, 120, 140 RPM, etc. In this way, the vibration can be relatively small when the multi-rotor aerial vehicle 100 flies with the first rotor 20 and the second rotor 30 having the same or similar rotational speed and in a direction from the second side 12 toward the first side 11 or in a direction from the first side 11 toward the second side 12, and the imaging quality of the imaging device 200 can be relatively high. In addition, the predetermined value N may be close to zero. It can be understood that may also be set based on actual needs, such as less than or equal to 20 revolution per second (RPS), less than 30 RPS, etc., which is not limited in this embodiment.

Referring to FIG. 7 and FIG. 9, in this embodiment, when the multi-rotor aerial vehicle 100 is hovering, the flight control system 40 of the multi-rotor aerial vehicle 100 can also be used to control the first rotor 20 to rotate at a third rotational speed; control the second rotor 30 to rotate at a fourth rotational speed, where the absolute value of the different between the first rotational speed and the second rotational speed may be less than the absolute value of the difference between the third rotational speed and the fourth rotational speed. That is, the flight control system 40 can also be used to implement the processes at S3 and S4.

Since the torque coefficient of the first rotor 20 may be less than the torque coefficient of the second rotor 30, the interaction of the first rotor 20 with the air may be less than the interaction of the second rotor 30 with the air. Driven by the same power of the driving motor, when the first rotor 20 rotates at the third rotational speed, the second rotor 30 rotates at the fourth rotational speed, and the third rotational speed is greater than the fourth rotational speed, the pulling force generated by the first rotor 20 can be ensured to equal to the pulling force generated by the second rotor 30. In this way, the body 10 can be balanced and the multi-rotor aerial vehicle 100 can hover.

Referring to FIG. 9, in this embodiment, when the torque coefficient of the second rotor 30 is greater than the torque coefficient of the first rotor 20, the first side 11 may be the nose side of the body 10, the second side 12 may be the tail side of the body 10, and the multi-rotor aerial vehicle 100 flying in the direction from the second side 12 toward the first side 11 may indicate that the multi-rotor aerial vehicle 100 is in the forward flight state (as shown in FIG. 2). At this time, the first rotor 20 mat rotate at the first rotational speed, the second rotor 30 may rotate at the second rotational speed, and the absolute value of the difference between the first rotational speed and the second rotational speed may be less than the predetermined value N. When the multi-rotor aerial vehicle 100 is hovering (shown in FIG. 5), the first rotor 20 may rotate at a third rotational speed, the second rotor 30 may rotate at a fourth rotational speed, where the absolute value of the difference between the first rotational speed and the second rotational speed may be less than the difference between the third rotational speed and the fourth rotational speed. Therefore, when the multi-rotor aerial vehicle 100 is flying forward, since the absolute value of the difference between the first rotational speed and the second rotational speed may be less than the absolute value of the difference between the third rotational speed and the fourth rotational speed, the frequency band between the propeller frequency of the first rotor 20 and the propeller frequency of the second rotor 30 may be narrower than when hovering. The probability of the body 10 and the rotor resonating may be lower, thereby reducing the probability of the body 10 and the rotor resonating and causing poor imaging effect.

In other embodiments, when the torque coefficient of the second rotor 30 is less than the torque coefficient of the first rotor 20, the first side 11 may be the nose side of the body 10, the second side 12 may be the tail side of the body 10, and the multi-rotor aerial vehicle 100 flying in the direction from the first side 11 toward the second side 12 may indicate that the multi-rotor aerial vehicle 100 is the backward flight state. At this time, the first rotor 20 mat rotate at the first rotational speed, the second rotor 30 may rotate at the second rotational speed, and the absolute value of the difference between the first rotational speed and the second rotational speed may be less than the predetermined value N. When the multi-rotor aerial vehicle 100 is hovering, the first rotor 20 may rotate at the third rotational speed, the second rotor 30 may rotate at the fourth rotational speed, where the absolute value of the difference between the first rotational speed and the second rotational speed may be less than the difference between the third rotational speed and the fourth rotational speed. Therefore, when the multi-rotor aerial vehicle 100 is flying backward, since the absolute value of the difference between the first rotational speed and the second rotational speed may be less than the absolute value of the difference between the third rotational speed and the fourth rotational speed, the frequency band between the propeller frequency of the first rotor 20 and the propeller frequency of the second rotor 30 may be narrower than when hovering and the probability of the body 10 and the rotor resonating may be lower.

In other embodiments, when the torque coefficient of the second rotor 30 is greater than the torque coefficient of the first rotor 20, the first side 11 may be the left side of the body 10, the second side 12 may be the right side of the body 10, and the multi-rotor aerial vehicle 100 flying in the direction from the second side 12 toward the first side 11 may indicate that the multi-rotor aerial vehicle 100 is the left flight state. At this time, the first rotor 20 mat rotate at the first rotational speed, the second rotor 30 may rotate at the second rotational speed, and the absolute value of the difference between the first rotational speed and the second rotational speed may be less than the predetermined value N. When the multi-rotor aerial vehicle 100 is hovering, the first rotor 20 may rotate at the third rotational speed, the second rotor 30 may rotate at the fourth rotational speed, where the absolute value of the difference between the first rotational speed and the second rotational speed may be less than the difference between the third rotational speed and the fourth rotational speed. Therefore, when the multi-rotor aerial vehicle 100 flies left, since the absolute value of the difference between the first rotational speed and the second rotational speed may be less than the absolute value of the difference between the third rotational speed and the fourth rotational speed, the frequency band between the propeller frequency of the first rotor 20 and the propeller frequency of the second rotor 30 may be narrower than when hovering and the probability of the body 10 and the rotor resonating may be lower.

In other embodiments, when the torque coefficient of the second rotor 30 is less than the torque coefficient of the first rotor 20, the first side 11 may be the left side of the body 10, the second side 12 may be the right side of the body 10, and the multi-rotor aerial vehicle 100 flying in the direction from the first side 11 toward the second side 12 may indicate that the multi-rotor aerial vehicle 100 is the right flight state. At this time, the first rotor 20 mat rotate at the first rotational speed, the second rotor 30 may rotate at the second rotational speed, and the absolute value of the difference between the first rotational speed and the second rotational speed may be less than the predetermined value N. When the multi-rotor aerial vehicle 100 is hovering, the first rotor 20 may rotate at the third rotational speed, the second rotor 30 may rotate at the fourth rotational speed, where the absolute value of the difference between the first rotational speed and the second rotational speed may be less than the difference between the third rotational speed and the fourth rotational speed. Therefore, when the multi-rotor aerial vehicle 100 flies right, since the absolute value of the difference between the first rotational speed and the second rotational speed may be less than the absolute value of the difference between the third rotational speed and the fourth rotational speed, the frequency band between the propeller frequency of the first rotor 20 and the propeller frequency of the second rotor 30 may be narrower than when hovering and the probability of the body 10 and the rotor resonating may be lower.

Of course, in addition to the first side 11 and the second side 12 of the multi-rotor aerial vehicle 100 being a fixed side of the body 10, during the flight of the multi-rotor aerial vehicle 100, the first side 11 and the second side 12 may also change based on the flight state of the multi-rotor aerial vehicle 100. For example, the multi-rotor aerial vehicle 100 may change from one flight state to another flight state, or the multi-rotor aerial vehicle 100 may change from one flight to another flight state, and then change to another flight state. Regardless of type of flight state change, the first rotor 20 and the second rotor 30 may also change, correspondingly, the original torque coefficient of the first rotor 20 and the torque coefficient of the second rotor 30 may also change.

The multi-rotor aerial vehicle 100 may change from one flight state to another, for example, the multi-rotor aerial vehicle 100 may change from the forward flight to the left flight. A detailed description will be provided below by taking the multi-rotor aerial vehicle 100 changing from the forward flight to the left flight as an example. At the initial moment, the first side 11 may be the nose side of the body 10, the second side 12 may be the tail side of the body 10, and the multi-rotor aerial vehicle 100 may be flying forward. The torque coefficient K1 of the rotor on the tail side may be greater than the torque coefficient K2 of the rotor on the nose side. At this time, the first rotor 20 may rotate at the first rotational speed of the forward flight, the second rotor 30 may rotate at the second rotational speed of the forward flight, and the absolute value of the difference between the first rotational speed of the forward flight and the second rotational speed of the forward flight may be less than the predetermined value N. Therefore, when the multi-rotor aerial vehicle 100 is flying forward, the frequency band between the propeller frequency of the first rotor 20 and the propeller frequency of the second rotor 30 may be relatively narrow. When the multi-rotor aerial vehicle 100 changes from forward flight to left flight, the first rotor 20 may change from a rotor on the nose side to a rotor on the left side of the body, the second rotor 30 may change from a rotor on the tail side to a rotor on the right side of the body, and the torque coefficient K3 of the rotor on the right side of the body may be greater than the torque coefficient K4 of the rotor on the left side of the body. At this time, the first rotor 20 may rotate at the first rotational speed of the left flight, the second rotor 30 may rotate at the second rotational speed of the left flight, and the absolute value of the difference between the first rotational speed of the left flight and the second rotational speed of the left flight may be less than the predetermined value N. Therefore, when the multi-rotor aerial vehicle 100 flies left, the frequency band between the propeller frequency of the first rotor 20 and the propeller frequency of the second rotor 30 may be relatively narrow. In this way, by changing the torque coefficients of the rotors on the first side 11 and the second side 12, the multi-rotor aerial vehicle 100 can ensure that the frequency band between the propeller frequency of the first rotor 20 and the propeller frequency of the second rotor 30 is relatively narrow in both the forward flight and the left flight. As such, the probability of resonance between the body 10 and the rotor can be relatively low, and the imaging quality of the imaging device 200 can be relatively high. In one example, the first rotational speed of the forward flight may be equal to the first rotational speed of the left flight, and the second rotational speed of the forward flight may be equal to the second rotational speed of the left flight. In addition, the multi-rotor aerial vehicle 100 can change from one flight state to other flight states. For example, the multi-rotor aerial vehicle 100 may change from the forward flight to the right flight, the multi-rotor aerial vehicle 100 may change from the forward flight to the backward flight, the multi-rotor aerial vehicle 100 may change from the left flight to the right flight, etc., all of which can be operated with reference to the foregoing embodiment of changing from the forward flight to the left flight, which will not be repeated here.

The multi-rotor aerial vehicle 100 may change from one flight state to another flight state, and then change to another flight state. For example, the multi-rotor aerial vehicle 100 may change from the forward flight to the left flight, and then change from the left flight to the backward flight. A detailed description will be provided by taking the case where the /10 is changing from the forward flight to the left flight, and then from the left flight to the backward flight as an example. For the multi-rotor aerial vehicle 100 changing from the forward flight to the left flight, reference may be made to the embodiment described above, and no further description will be provided here. When the multi-rotor aerial vehicle 100 has changed from the forward flight to the left flight, and needs to change from the left flight to the backward flight, the first rotor 20 may change from a rotor on the left side of the body to a rotor on the nose side, the second rotor 30 may change from a rotor on the right side of the body to a rotor on the tail side, and the torque coefficient K5 of the rotor on the nose side may be greater than the torque coefficient K6 of the rotor on the tail side. At this time, the first rotor 20 may rotate at the first rotational speed of the backward flight, the second rotor 30 may rotate at the second rotational speed of the backward flight, and the absolute value of the difference between the first rotational speed of the backward flight and the second rotational speed of the backward flight may be less than the predetermined value N. Therefore, when the multi-rotor aerial vehicle 100 is flying backward, the frequency band of the propeller frequency of the first rotor 20 and the propeller frequency of the second rotor 30 can still be relatively narrow. As such, by changing the torque coefficients of the rotors on the first side 11 and the second side 12, the multi-rotor aerial vehicle 100 can ensure that the frequency band between the propeller frequency of the first rotor 20 and the propeller frequency of the second rotor 30 is relatively narrow during the forward flight, the left flight, and the backward flight. As such, the probability of resonance between the body 10 and the rotor can be relatively low, and the imaging quality of the imaging device 200 can be relatively high.. In addition, the multi-rotor aerial vehicle 100 can change from one flight state to another flight state, and then change to another flight state. For example, the multi-rotor aerial vehicle 100 may change from the forward flight to the right flight, the multi-rotor aerial vehicle 100 may change from the forward flight to the right flight, and then change to the backward flight; the multi-rotor aerial vehicle 100 may change from the forward flight to the left flight, and then to the left flight; the multi-rotor aerial vehicle 100 may change from the left flight to the right flight, and then to the forward flight, etc., all of which can be operated with reference to the foregoing embodiment of changing from the forward flight to the left flight, and then from the left flight to the backward flight, which will not be repeated here.

In this embodiment, the number of the first rotor 20 can be more than one, and the number of the second rotor 30 can be more than one. In the embodiment shown in FIG. 9, when the multi-rotor aerial vehicle 100 is an X-shaped quadrotor, the first rotor 20 may be the two rotors disposed at the front side (the nose side) of the body 10, and the second rotor 30 may be the two rotors disposed at the rear side (the tail side) of the body 10; alternatively, the second rotor 30 may be the two rotors disposed at the front side (the nose side) of the body 10, and the first rotor 20 may be the two rotors disposed at the rear side (the tail side) of the body 10. In another example, when the multi-rotor aerial vehicle 100 of the present disclosure is a cross-shaped quadrotor, the first rotor 20 may be the two rotors disposed at the front side (the nose side) and the left side of the body 10, and the second rotor 30 may be the two rotors disposed at the rear side (the tail side) and the right side of the body 10. Of course, the number and mounting method of the first rotor 20 and the second rotor 30 are not limited to the above discussion, and can be adjusted based on actual needs, which is not limited here. In addition, when the number of the first rotors 20 is more than one and the number of the second rotor 30 is also more than one, both the first rotational speed and the third rotational speed may be the average rotational speed of the multiple first rotors 20, and both the second rotational speed and the fourth rotational speed may be the average rotational speed of the multiple second rotors 30.

In this embodiment, the torque coefficient of each rotor may be determined by any one or more of the dimensions of the rotor and the wing shape parameters of the rotor. In other words, each of the size of the rotor and the wing shape parameters of the rotor may affect the torque coefficient of the rotor. More specifically, under the condition of other parameters being the same, if the first rotor 20 and the second rotor 30 are only different in size, the torque coefficient of the first rotor 20 and the torque coefficient of the second rotor 30 may also be different; or, if the first rotor 20 and the second rotor 30 only have different wing shape parameters, the torque coefficient of the first rotor 20 and the torque coefficient of the second rotor 30 may also be different; or, if the size and wing shape parameters of the first rotor 20 and the second rotor 30 are different, the torque coefficient of the first rotor 20 and the torque coefficient of the second rotor 30 may also be different. In this way, the multi-rotor aerial vehicle 100 can adopt different rotor sizes and/or wing shape parameters to mount the first rotor 20 and the second rotor 30 with suitable torque coefficients (for example, the aerial vehicle 100 may adopt different rotor sizes and/or wing shape parameters to realize the torque coefficient of the second rotor 30 being different from the torque coefficient of the first rotor 20).

In the embodiment shown in FIG. 9, the size of the first rotor 20 and the second rotor 30 are different, where the size of the rotor includes the diameter of the rotor. The larger the diameter of the rotor, the greater the torque coefficient of the rotor; and the smaller the diameter of the rotor, the smaller the torque coefficient of the rotor. The diameter of the second rotor 30 may be greater than the diameter of the first rotor 20, and the interaction of the second rotor 30 with air may be greater than the interaction of the first rotor 20 with the air. Therefore, the multi-rotor aerial vehicle 100 flies in the direction from the rotor with the larger diameter toward the rotor with the smaller diameter, that is, when the multi-rotor aerial vehicle 100 flies in the direction from the second side 12 toward the first side 11 or from the first side 11 toward the second side 12, the excitation force frequency band of the multi-rotor aerial vehicle 100 may be narrower than the excitation force frequency band when hovering. This can reduce the possibility of the body 10 resonating with the first rotor 20 or the second rotor 30, and improve the imaging quality of the imaging device 200 carried by the body 10. In other embodiments, when the first side refers to the left side of the body, the second side refers to the right side of the body, the first rotor is the tow rotors on the left, and the second rotor is the two rotors on the right, the size of the second rotor being larger than the size of the first rotor can also realize the torque coefficient of the second rotor being greater than the torque coefficient of the first rotor. As such, when the aerial vehicle flies in a fixed-direction flight (the left flight), the absolute value of the difference between the first rotational speed of the first rotor and the second rotational speed of the second rotor may be relatively small, and the excitation force frequency band may be relatively narrow, thereby reducing the possibility of the body resonating with the first rotor or the second rotor, and improving the imaging quality of the imaging device carried by the body.

In other embodiments, the wing shape parameters of the first rotor 20 and the second rotor 30 may be different, where the wing shape parameters of the rotor may include one or more of the angle of attack, pitch, and chord length. The difference in the wing shape parameters of the first rotor 20 and the second rotor 30 may include one or more of the parameters being different. Take the angle of attack as an example, the larger the angle of attack of the rotor, the larger the windward area of the rotor, and the greater the interaction with the air, the greater the torque coefficient of the rotor; and the smaller the angle of attack of the rotor, the smaller the windward area of the rotor, and the smaller the interaction with the air, the smaller the torque coefficient of the rotor. In one example, the angle of attack of the second rotor 30 may be larger than the angle of attack of the first rotor 20, and the interaction of the second rotor 30 with the air may be greater than the interaction of the first rotor 20 with the air. Therefore, when the multi-rotor aerial vehicle 100 flies in the direction from the rotor with larger angle of attack toward the rotor with small angle of attack, that is, multi-rotor aerial vehicle 100 flies in the direction from the second side 12 toward the first side 11 or from the first side 11 toward the second side 12, the excitation force frequency band of the multi-rotor aerial vehicle 100 may be narrower than the excitation force frequency band when hovering. This can reduce the possibility of the body 10 resonating with the first rotor 20 or the second rotor 30, and improve the imaging quality of the imaging device 200 carried by the body 10. Next, take the pitch as an example. The larger the pitch of the rotor, the greater the torque coefficient of the rotor; and the smaller the pitch of the rotor, the smaller the torque coefficient of the rotor. In another example, the pitch of the second rotor 30 may be larger than the pitch of the first rotor 20. Therefore, when the multi-rotor aerial vehicle 100 flies in the direction from the rotor with the larger pitch toward the rotor with the smaller pitch, that is, multi-rotor aerial vehicle 100 flies in the direction from the second side 12 toward the first side 11 or from the first side 11 toward the second side 12, the excitation force frequency band of the multi-rotor aerial vehicle 100 may be narrower than the excitation force frequency band when hovering. This can reduce the possibility of the body 10 resonating with the first rotor 20 or the second rotor 30, and improve the imaging quality of the imaging device 200 carried by the body 10. Next, take the chord length as an example. The longer the chord length of the rotor, under the same diameter, the larger the cross-section area of the rotor and the greater the interaction with the air; and the shorter the chord length of the rotor, under the same diameter, the smaller the cross-section area of the rotor and the smaller the interaction with the air. In another example, the chord length of the second rotor 30 may be longer than the chord length of the first rotor 20. Therefore, when the multi-rotor aerial vehicle 100 flies in the direction from the rotor with the longer chord length toward the rotor with the shorter chord length, that is, multi-rotor aerial vehicle 100 flies in the direction from the second side 12 toward the first side 11 or from the first side 11 toward the second side 12, the excitation force frequency band of the multi-rotor aerial vehicle 100 may be narrower than the excitation force frequency band when hovering. This can reduce the possibility of the body 10 resonating with the first rotor 20 or the second rotor 30, and improve the imaging quality of the imaging device 200 carried by the body 10.

In this embodiment, the torque coefficient of the rotor may be determined at the factory, or it may be further adjusted during use. More specifically, the torque coefficient of the first rotor 20 may be adjustable, the torque coefficient of the second rotor 30 may be adjustable, or both the torque coefficient of the first rotor 20 and the torque coefficient of the second rotor 30 may be adjustable. For example, a rotor pitch changing device may be disposed on the rotor. The multi-rotor aerial vehicle 100 may use the pitch changing device to change the angle of attack of the first rotor 20 or the second rotor 30 to change the pitch of the first rotor 20 or the 30, thereby adjusting the torque coefficient of the first rotor 20 or the second rotor 30. In the foregoing embodiments, when the multi-rotor aerial vehicle 100 changes its flight state, the original torque coefficient of the first rotor 20 and the original torque coefficient of the second rotor 30 may be changed by using the pitch changing device. A detailed description of how to adjust the torque coefficient of the rotor is provided by taking the quadrotor aerial vehicle changing from the forward flight to the left flight as an example. When the quadrotor aerial vehicle is flying forward, the torque coefficient of the two rotors on the tail side (the second rotor 30) may be K1, the torque coefficient of the two rotors on the nose side (the first rotor 20) may be K2, and K1 may be greater than K2. When the quadrotor aerial vehicle changes to the left flight, the pitch of all the rotors may change such that the torque coefficients of all the rotors may change. More specifically, the pitch of the first rotor 20 originally on the right may change, and the torque coefficient may change to K3, the pitch of the second rotor 30 originally on the right may change, and the torque coefficient may change to K3; and the pitch of the first rotor 20 originally on the left may change, and the torque coefficient may change to K4, the pitch of the second rotor 30 originally on the left may change, and the torque coefficient may change to K4. Therefore, the torque coefficients of the two rotors on the right side of the body may both be K3, the torque coefficients of the two rotors on the left side of the body may both be K4, and K3 may be greater than K4. In one example, K1 can be equal to K3, K2 can be equal to K4, and the pitch of the first rotor 20 originally on the left can remain unchanged. The torque coefficient can still be K1, the pitch of the first rotor 20 can increase, and the torque coefficient can change to K4.

Referring to FIG. 8 and FIG. 9, the flight control system 40 of the multi-rotor aerial vehicle 100 according to an embodiment of the present disclosure can also be used to control the third rotational speed of the first rotor 20 to change to the first rotational speed; and control the fourth rotational speed of the second rotor 30 to change to the second rotational speed, where the absolute value of the difference between the first rotational speed and the second rotational speed may be less than the absolute value of the difference between the third rotational speed and the fourth rotational speed to cause the multi-rotor aerial vehicle 100 to change from hovering to flying from the second side toward the first side. That is, the flight control system 40 can be used to implement the processes at S5 and S6.

More specifically, the flight control system 40 can first determine the current state of the multi-rotor aerial vehicle 100. When it is determined that the multi-rotor aerial vehicle 100 is hovering, since the absolute value of the difference between the third rotational speed and the third rotational speed is relatively large, therefore, the flight control system 40 may need to adjust the third rotational speed and the fourth rotational speed. The flight control system 40 may control the speed of the driving motor connected to the first rotor 20 to reduce to reduce the speed of the first rotor 20 and control the speed of the driving motor connected to the second rotor 30 to increase to increase the speed of the second rotor 30, such that the third rotational speed of the first rotor 20 can change to the first rotational speed, the fourth rotational speed can change to the second rotational speed, and the absolute value of the difference between the first rotational speed and the second rotational speed can be less than the absolute value of the difference between the third rotational speed and the fourth rotational speed when hovering. In addition, when hovering, the pulling of the first rotor 20 may be similar to the pulling force of the second rotor 30. After the flight control system 40 adjusts the third rotational speed and the fourth rotational speed, the pulling force of the first rotor 20 may decrease, and the pulling force of the second rotor 30 may increase. As a result, the multi-rotor aerial vehicle 100 is subjected to the horizontal component moment of the second rotor 30 pointing toward the first rotor 20, such that the multi-rotor aerial vehicle 100 can from the second side 12 toward the first side 11. In this way, the multi-rotor aerial vehicle 100 can change from the hovering state to the fixed-direction flight state.

Further, the flight control system 40 may further determine whether the absolute value of the difference between the first rotational speed and the second rotational speed is less than the predetermined value N. If the absolute value of the difference between the first rotational speed and the second rotational speed is still greater than the predetermined value, the flight control system 40 may continue controlling the speed of the driving motor connected to the first rotor 20 to reduce to reduce the speed of the first rotor 20 and controlling the speed of the driving motor connected to the second rotor 30 to increase to increase the speed of the second rotor 30, until the absolute value of the difference between the first rotational speed and second rotational speed is less than the predetermined value. In this embodiment, the predetermined value may be set to a relatively small value, such that the propeller frequency of the first rotor 20 and the propeller frequency of the second rotor 30 of the multi-rotor aerial vehicle 100 in the fixed-direction flight may be similar, the excitation force frequency may be relatively narrow, thereby reducing the probability of the body 10 resonating with the first rotor 20 or the second rotor 30, and improving the imaging quality of the imaging device 200.

In summary, in the multi-rotor aerial vehicle 100 provided in an embodiment of the present disclosure, the first rotor 20 and the second rotor 30 can have different torque coefficients. During the fixed-direction flight of the multi-rotor aerial vehicle 100, the flight control system 40 may control the first rotor 20 to rotate at the first rotational speed, control the second rotor 30 to rotate at the second rotational speed, and the absolute value of the difference between the first rotational speed and the second rotational speed can be relatively small, the excitation force frequency may be relatively narrow, thereby reducing the probability of the body 10 resonating with the first rotor 20 or the second rotor 30, and improving the imaging quality of the imaging device 200 carried by the body 10.

In the present description, descriptions of reference terms such as "an embodiment," "some embodiments," "illustrative embodiment," "example," "specific example," or "some examples," mean that characteristics, structures, materials, or features described in relation to the embodiment or example are included in at least one embodiment or example of the present disclosure. In the present description, illustrative expression of the above terms does not necessarily mean the same embodiment or example. Further, specific characteristics, structures, materials, or features may be combined in one or multiple embodiments or examples in a suitable manner.

Processes or methods described in the flow charts or described in other manners may be understood as including one or more code modules, segments, or portions of executable instructions configured to execute specific logic functions or steps of a process. The scope of the preferred embodiments of the present disclosure may include other executions. Executions may not need follow the illustrated or described sequence or order. The functions may be executed in a substantially simultaneous manner or in a reversed order. These should be understood by a person having ordinary skills in the technical field of the embodiments of the present disclosure.

Logics and/or steps of illustrated in the flowchart or described in other manners may be regarded as a fixed-order sequence list of executable instructions configured to execute the logic functions. The logics and/or steps may be executed in any suitable non-transitory computer-readable medium, and may be used by instruction-execution systems, apparatuses, or devices (e.g., computer-based systems, systems having processors, or other systems that can retrieve instructions from the instruction-execution systems, apparatuses, or devices and execute the instructions), or may be used in combination with the instruction-execution systems, apparatuses, or devices. In the present specification, a "computer-readable medium" may include any device that can include, store, communicate, broadcast, or transfer programs to be used by instruction-execution systems, apparatuses, or devices. Examples of the computer-readable medium may include, but not be limited to, the following: an electrical connector (e.g., an electrical device) having one or multiple wirings, a portable computer disk (e.g., a magnetic device), a random access memory ("RAM"), a read only memory ("ROM"), an erasable programmable read only memory ("EPROM') or a flash memory, an optical device, or a portable compact disc read only memory ("CDROM"). In some embodiments, the computer-readable medium may be paper on which the programs may be printed or other suitable medium, because the paper or other medium may be optically scanned. The scanned copy may be edited, interpreted, or if necessary processed using other suitable method to obtain the programs in an electrical manner. The programs can then be stored in a computer storage device.

A person having ordinary skills in the art can appreciate that various parts of the present disclosure may be implemented using related hardware, computer software, firmware, or a combination thereof. In the above embodiments, multiple steps or methods may be executed by software or firmware stored in the computer-readable storage medium and executable by a suitable instruction-executing system. For example, if the present disclosure is executed by hardware, the hardware may include any of the following technologies known in the art or any combination thereof: a discreet logic circuit of a logic gate circuit configured to perform logic functions for digital signals, an application specific integrated circuit having suitable combinations of logic gate circuits, a programmable gate array ("PGA"), a field programmable gate array ("FPGA"), etc.

A person having ordinary skills in the art can understand that some or all of the steps of the above embodiments of the disclosed method may be implemented by a program instructing relevant hardware. The program may be stored in a computer-readable medium. When executed, the program may include one of the steps or a combination of the steps of the disclosed method. Various functional units may be integrated in a single processing module, or may exist as separate physical units. In some embodiments, two or more units may be integrated in a single module. The integrated module may be executed by hardware or by software functional modules. If the integrated module is executed by software functional modules and sold or used as an independent product, the integrated module may also be stored in a computer-readable storage medium. The storage medium mentioned above may be a read only storage device (e.g., memory), a magnetic disk, or an optical disk, etc.

Although the above has shown and described the embodiments of the present disclosure, it should be understood that the above embodiments are illustrative, and cannot be understood as limiting the present disclosure. A person having ordinary skills in the art can modify, edit, replace, and vary the embodiments within the scope of the present disclosure.

## Claims

1. A multi-rotor aerial vehicle comprising:
a body, the body including a first side and a second side opposite to each other;
a first rotor connected to the first side of the body; and
a second rotor connected to the second side of the body, a torque coefficient of the second rotor being different from a torque coefficient of the first rotor, wherein
when the multi-rotor aerial vehicle flies in a direction from the second side toward the first side or from the first side toward the second side, the first rotor rotates at a first rotational speed, the second rotor rotates at a second rotational speed, and an absolute value of a difference between the first rotational speed and the second rotational speed is less than a predetermined value.

2. The multi-rotor aerial vehicle of claim 1, wherein:
the torque coefficient of the second rotor is greater than the torque coefficient of the first rotor, the first side is a nose side, and the second side is a tail side; and/or
the torque coefficient of the second rotor is less than the torque coefficient of the first rotor, the first side is the nose side, and the second side is the tail side; and/or
the torque coefficient of the second rotor is greater than the torque coefficient of the first rotor, the first side is a left side, and the second side is a right side; and/or
the torque coefficient of the second rotor is less than the torque coefficient of the first rotor, the first side is the left side, and the second side is the right side.

3. The multi-rotor aerial vehicle of claim 1 or 2, wherein:
when the multi-rotor aerial vehicle is hovering, the first rotor rotates at a third rotational speed, the second rotor rotates at a fourth rotational speed, and the absolute value of the difference between the first rotational speed and second rotational speed is less than an absolute value of a difference between the third rotational speed and the fourth rotational speed.

4. The multi-rotor aerial vehicle of claim 1, wherein:
a number of the first rotor is more than one, and a number of the second rotor is more than one.

5. The multi-rotor aerial vehicle of claim 1, wherein:
a diameter of the first rotor is different from a diameter of the second rotor.

6. The multi-rotor aerial vehicle of any one of claims 1 to 5, wherein:
wing shape parameters of the first rotor and the second rotor are different, and the wing shape parameters include one or more of an angle of attack, a pitch, and a chord length.

7. The multi-rotor aerial vehicle of claim 1, wherein:
the torque coefficient of the first rotor is adjustable, and the torque coefficient of the second rotor is adjustable.

8. A multi-rotor aerial vehicle control method, the multi-rotor aerial vehicle including a body, the body including a first side and a second side opposite to each other; the multi-rotor aerial vehicle further including a first rotor connected to the first side of the body and a second rotor connected to the second side of the body, a torque coefficient of the second rotor being different from a torque coefficient of the first rotor; when the multi-rotor aerial vehicle flying from the second side toward the first side or from the first side toward the second side, comprising:
controlling the first rotor to rotate at a first rotational speed; and
controlling the second rotor to rotate at a second rotational speed, wherein
an absolute value of a difference between the first rotational speed and the second rotational speed is less than a predetermined value.

9. The control method of claim 8, wherein:
the torque coefficient of the second rotor is greater than the torque coefficient of the first rotor, the first side is a nose side, and the second side is a tail side; and/or
the torque coefficient of the second rotor is less than the torque coefficient of the first rotor, the first side is the nose side, and the second side is the tail side; and/or
the torque coefficient of the second rotor is greater than the torque coefficient of the first rotor, the first side is a left side, and the second side is a right side; and/or
the torque coefficient of the second rotor is less than the torque coefficient of the first rotor, the first side is the left side, and the second side is the right side.

10. The control method of claim 8 or 9, wherein when the multi-rotor aerial vehicle is hovering, further comprising:
controlling the first rotor to rotate at a third rotational speed; and
controlling the second rotor to rotate at a fourth rotational speed, the absolute value of the different between the first rotational speed and the second rotational speed being less than an absolute value of a difference between the third rotational speed and the fourth rotational speed.

11. The control method of claim 8, wherein:
a number of the first rotor is more than one, and a number of the second rotor is more than one.

12. The control method of claim 8, wherein:
a diameter of the first rotor is different from a diameter of the second rotor.

13. The control method of any one of claims 8 to 12, wherein:
wing shape parameters of the first rotor and the second rotor are different, and the wing shape parameters include one or more of an angle of attack, a pitch, and a chord length.

14. The control method of claim 8, wherein:
the torque coefficient of the first rotor is adjustable, and the torque coefficient of the second rotor is adjustable.

15. The control method of claim 10, further comprising:
controlling the third rotational speed of the first rotor to change to the first rotational speed; and
controlling the fourth rotational speed of the second rotor to change to the second rotational speed, wherein the absolute value of the difference between the first rotational speed and the second rotational speed is less than the absolute value of the difference between the third rotational speed and the fourth rotational speed to cause the multi-rotor aerial vehicle to change from hovering to flying from the second side toward the first side or from the first side to the second side.

16. A multi-rotor aerial vehicle, the multi-rotor aerial vehicle including a body, the body including a first side and a second side opposite to each other; the multi-rotor aerial vehicle further including a first rotor connected to the first side of the body and a second rotor connected to the second side of the body, a torque coefficient of the second rotor being different from a torque coefficient of the first rotor; the multi-rotor aerial vehicle further including a flight control system, when the multi-rotor aerial vehicle flying from the second side toward the first side or from the first side toward the second side, the flight control system is configured to:
control the first rotor to rotate at a first rotational speed; and
control the second rotor to rotate at a second rotational speed, wherein
an absolute value of a difference between the first rotational speed and the second rotational speed is less than a predetermined value.

17. The multi-rotor aerial vehicle of claim 16, wherein:
the torque coefficient of the second rotor is greater than the torque coefficient of the first rotor, the first side is a nose side, and the second side is a tail side; and/or
the torque coefficient of the second rotor is less than the torque coefficient of the first rotor, the first side is the nose side, and the second side is the tail side; and/or
the torque coefficient of the second rotor is greater than the torque coefficient of the first rotor, the first side is a left side, and the second side is a right side; and/or
the torque coefficient of the second rotor is less than the torque coefficient of the first rotor, the first side is the left side, and the second side is the right side.

18. The multi-rotor aerial vehicle of claim 16 or 17, wherein when the multi-rotor aerial vehicle is hovering, the flight control system is further configured to:
control the first rotor to rotate at a third rotational speed; and
control the second rotor to rotate at a fourth rotational speed, the absolute value of the different between the first rotational speed and the second rotational speed being less than an absolute value of a difference between the third rotational speed and the fourth rotational speed.

19. The multi-rotor aerial vehicle of claim 16, wherein:
a number of the first rotor is more than one, and a number of the second rotor is more than one.

20. The multi-rotor aerial vehicle of claim 16, wherein:
a diameter of the first rotor is different from a diameter of the second rotor.

21. The multi-rotor aerial vehicle of any one of claims 16 to 20, wherein:
wing shape parameters of the first rotor and the second rotor are different, and the wing shape parameters include one or more of an angle of attack, a pitch, and a chord length.

22. The multi-rotor aerial vehicle of claim 16, wherein:
the torque coefficient of the first rotor is adjustable, and the torque coefficient of the second rotor is adjustable.

23. The multi-rotor aerial vehicle of claim 18, wherein the flight control system is further configured to:
control the third rotational speed of the first rotor to change to the first rotational speed; and
control the fourth rotational speed of the second rotor to change to the second rotational speed, the absolute value of the difference between the first rotational speed and the second rotational speed being less than the absolute value of the difference between the third rotational speed and the fourth rotational speed to cause the multi-rotor aerial vehicle to change from hovering to flying from the second side toward the first side or from the first side to the second side.
